# EUROPÄISCHE PATENTSCHRIFT

(11) **EP 1 755 382 B1**
(45) Veröffentlichungstag und Bekanntmachung des Hinweises auf die Patenterteilung: **30.01.2013**
(21) Anmeldenummer: 05755997.3
(22) Anmeldetag: 30.05.2005
(51) Int. Cl.: A01N 25/10, B05B 5/00, A01M 7/00, A01C 23/00, D01D 5/24

(54) **VERWENDUNG UND VORRICHTUNG ZUR AUSBRINGUNG VON NANOSKALIGEN POYLMERFASERN ALS TRÄGER FÜR LANDWIRTSCHAFTLICHE WIRKSTOFFE**
DEVICE AND USE THEREOF FOR PRODUCING NANOSCALAR POLYMER FIBRES THAT ARE USED AS SUPPORTS FOR AGRICULTURAL ACTIVE INGREDIENTS
DISPOSITIF ET UTILISATION ASSOCIEE POUR PRODUIRE DES FIBRES POLYMERES NANOMETRIQUES SERVANT DE SUPPORTS POUR DES AGENTS ACTIFS AGRICOLES

(30) Priorität: 28.05.2004 DE 102004026745
(43) Veröffentlichungstag der Anmeldung: 28.02.2007
(73) Patentinhaber: Philipps-Universität Marburg, 35032 Marburg (DE); Justus-Liebig-Universität Gießen, 35390 Giessen (DE)
(72) Erfinder: GREINER, Andreas, 35287 Amöneburg (DE); WENDORFF, Joachim, H., 35043 Marburg-Schröck (DE); BECKER, Mathias, 35088 Battenberg (DE); DERSCH, Roland, 35037 Marburg (DE); HUMMEL, Hans, E., 35394 Giessen (DE)
(74) Vertreter: Buchhold, Jürgen
(86) Internationale Anmeldenummer: PCT/DE2005/000984
(87) Internationale Veröffentlichungsnummer: WO 2005/115143

(56) Entgegenhaltungen:
- WO-A-01/09414
- WO-A-01/26610
- WO-A-01/27365
- WO-A-02/16680
- WO-A-98/03267
- WO-A-02/092339
- WO-A-03/034822
- DEITZEL J M ET AL: "Controlled deposition of electrospun poly(ethylene oxide) fibers" POLYMER, ELSEVIER SCIENCE PUBLISHERS B.V, GB, Bd. 42, Nr. 19, September 2001 (2001-09), Seiten 8163-8170, XP004245999 ISSN: 0032-3861 in der Anmeldung erwähnt
- RENEKER D H & CHUN I: "NANOMETRE DIAMETER FIBRES OF POLYMER, PRODUCED BY ELECTROSPINNING" NANOTECHNOLOGY, INSTITUTE OF PHYSICS, GB, Bd. 7, 1996, Seiten 216-223, XP000926677 ISSN: 0957-4484 in der Anmeldung erwähnt

## Beschreibung

Die vorliegende Erfindung betrifft ein Verfahren zu Ausbringung von landwirtschaftlichen Wirkstoffen sowie eine Vorrichtung zur Durchführung dieses Verfahrens.

### [Beschreibung und Stand der Technik]

Als "landwirtschaftliche Wirkstoffe" werden im Folgenden in der Natur vorkommende oder unter Einsatz chemischer Verfahren extrahierte oder unter Einsatz chemischer und/oder mikrobiologischer Verfahren hergestellte, zur Pflanzen- oder/und Boden-behandlung bekannte Wirkstoffe verstanden, wie zum Beispiel: Fungizide, Bakterizide, Insektizide, Akarizide, Nematizide, Helminthizide, Herbizide, Molluskizide, Rodentizide. Algizide, Aphizide, Larvizide, Ovizide, Fraß-Lockstoffe, Antifeedants, Kairomone, Repellents, Wildabwehrmittel, systemische Mittel sind, Pflanzenwuchsregulatoren oder Pflanzennährstoffe, wie z.B. aber nicht ausschliesslich Dünger.

Unter Insektiziden werden insbesondere Stoffe zur Beeinflussung der die Pflanzen umgebenden Tiere verstanden. Diese Stoffe können neben chemischen oder mikrobiologisch hergestellten Stoffen auch natürlich vorkommende Wirkstoffe, wie Extrakte, z.B. aus dem Neembaum oder der Quassia-Wurzel oder aber solche Stoffe sein, die das Sexualverhalten der die Pflanzen umgebende Tiere beeinflussen, wie z.B. Pheromone.

Beispielhaft für die wirtschafltiche Bedeutung solcher Stoffe sei erwähnt, dass insbesondere zur Vermeidung des Befalls von Maipflanzen durch den westlichen Maiswurzelbohrer (Diabrotica virgifer virgifera) zur Zeit weltweit mehrere Millionen Euro aufgebracht werden. Bei der bis 2003 noch nicht festgestellten Einschleppung allein dieses Schädlings -so schätzt die Biologische Bundesanstalt für Land- und Fortwirtschaft- müssten in Deutschland bis zu 25 Mio. Euro zum Schutz der Maispflanzen aufgebracht werden.

Es sind eine ganze Reihe von Verfahren zur Ausbringung von Wirkstoffen bekannt, mit denen Wirkstoffe dem Boden oder Pflanzen zugeführt werden können.

Dies sind die Ausbringung von
1) Flüssigkeiten in Tropfenform durch Spritzen, Sprühen, Nebeln, Bestreichen sowie Tröpfchenbewässerung,
2) Feststoffen in Form von Granulaten und Pulvern sowie
3) gasförmigen Stoffen über verschiedene Dispenser.

Beispiele für 1 sind die seit langem üblichen Verfahren zur Ausbringung oder Verteilung, mit Gießkanne, Handspritze, Rückenspritze, Traktor, Helikopter und Flugzeug.

Beispiele für 2 sind neben Granulaten und Pulvern auch Adsorbate an festen natürlichen oder künstlichen Partikeln, z. B. Maiskolbenschrot, an dem das Kairomon MCA absorbiert wurde (Hummel und Metcalf, 1996; Hummel et al., 1997; Wennemann und Hummel, 2001). Sehr viel Entwicklungsarbeit floss bereits in die Technologie der Dispenser. Eine kritische Übersicht über den bis 1982 erreichten Stand ist in der Monographie von Leonhardt und Beroza (1982) zu finden. Weitere Beispiele finden sich in Hummel und Müller (1984). Das Verfahren unter 2 wird üblicherweise zur Ausbringung von Dünger angewendet.

Beispiele für 3 sind Pheromone, die aus halboffenen PTFE-Kapillaren verdampft werden, z. B. formuliert mit Kleber und verteilt vom Flugzeug aus (Brooks et al., 1979). Weiterhin zu nennen sind Doppelkammer-Dispenser der Fa. Hercon Laboratories Corp., York, Pennsylvania, USA für Pheromone, wie sie von der Fa. BASF AG im Obst- und Weinbau Verwendung fanden. Schließlich sind zu nennen die von Shorey et al. (1996.) beschriebenen "Lecture-bottle"-Puffersysteme, in denen komprimierte Signalstoff-Lösungen aufbewahrt und aus denen auf Funkbefehl durch Ventile Formulierungen abgegeben werden.

Im anhängenden Literaturteil A sind zahlreiche Quellen aufgelistet, an Hand derer eine kritische Übersicht über die bis vor kurzem verfügbaren Systeme möglich ist.

Der Nachteil dieser Verfahren ist, dass im allgemeinen die Zuführung der Wirkstoffe nicht kontinuierlich ist, sich nur über einen sehr begrenzten Zeitraum erstreckt und dass Störfaktoren wie Wind und Regen diese Zuführung sowie den Verbleib des Wirkstoffes auf der Zielfläche (z. B. dem Boden im Bereich von dort später oder schon gewachsenen Pflanzen oder den Oberflächen von Pflanzen) sehr negativ beeinflussen. Dies hat zur Folge, dass bei einer erwünschten Bereitstellung von Wirkstoffen über einen längeren Zeitraum hinweg eine *mehrfache* Ausbringung des Wirkstoffes notwendig ist, was mit erhöhten Kosten verbunden ist. Die Alternative einer einmaligen Ausbringung der gesamten Wirkstoffmenge birgt die Gefahr, dass die Wirkstoffe in Nicht-Zielflächen verlagert werden und somit zumindest einen finanziellen Verlust für den Anwender, wenn nicht sogar unerwünschte ökologische Einflüsse in Nicht-Zielflächen darstellen. Der Abtransport über Wasser hin in das Erdreich oder in Seen, Bäche und Flüsse ist ein typisches Beispiel.

Hier sind Trägermaterialien oder -systeme vorteilhaft, wie sie für medizinische Wirkstoffe aber auch Wirkstoffe für die Landwirtschaft beschrieben wurden.

Die Patentschrift DE 703 750 A beschreibt die Herstellung von Röhren, Bändern, Pasten aus Polyvinylchlorid für therapeutische Anwendungen in Bandagen, Krankenkleidern.

Die Schrift WO 01/09414 A1 sieht Meso- oder Nanoröhren mit einem Innendurchmesser von 10 nm bis 50 µm und ein Verfahren zu deren Herstellung vor. Die Hohlfasern können durch die Beschichtung von abbaubaren Materialien mit nicht-abbaubaren Materialien hergestellt werden, indem die abbaubaren Materialien durch z.B. termische Verfahren zerstört werde.

Auch die WO 02/16680 A1 betrifft die Herstellung von nanoskaligen Fasern mit einem Durchmesser von 20 bis 4000 nm. Die Fasern sind porös und werden können durch Elektrospinning hergestellt werden.

Die WO 01/27365 A1 sieht eine Vorrichtung vor, mit deren Hilfe eine Wunde verschlossen werden kann. Dabei wird eine Mischung von verschiedenen Polymeren unmittelbar über der Wunde elektroversponnen und die Wunde auf diese Weise verschlossen. Auch die WO 02/092339 A1 sieht bioverträgliche und - abbaubare fibröse Materialien zur Anwendung im Bereich der kontrollierten Gewebeheilung vor.

Deitzel et al. (Polymer, 2001) beschreiben darüber hinaus das kontrollierte Auftragen von elektroversponnenen Polyethylenoxid-Fasern auf einer stationären Oberfläche. Auch die WO 98/03267 A1 und die WO 01/26610 A1 sehe Verfahren und Apparaturen vor, mit deren Hilfe beispielsweise Wundflächen mit einem wirkstoffenthaltenden Material bedeckt werden können. Das Material wird dazu elektroversponnen. In allen diesen Fällen ist es nicht möglich wirkstoffenthaltende Träger unmittelbar und ohne separaten Herstellungsprozess beispielsweise auf einer Ackerfläche auszubringen.

DE 19645919 A1 beschreibt wirkstoffhaltige Formkörper auf Basis von biologisch abbaubaren thermoplastischen Kunststoffen zur Bekämpfung von Parasiten, pflanzenschädigenden Insekten, wobei die Formkörper als Bänder, Medaillons, Ohrmarken bzw. als Bodengranulate vorliegen.

DE 19645842 A1 beschreibt Pflanzenbehandlungsmittel bestehend aus thermoplastisch verarbeitbaren biologisch abbaubaren Polymeren versehen mit mindestens einem agrochemischen Wirkstoff, wobei die Verabreichung über Formkörper wie Folien erfolgt.

DE 10128531 A1 beschreibt wasserlösliche oder wasserdispergierbare Pfropfpolymerisate als Beschichtungsmaterial, Verpackungsmaterial oder Matrixbildner für Agrochemikalien.

DE 10115225 A1 beschreibt wirkstoffhaltige Formkörper auf Basis von thermoplastisch verarbeitbaren Polyurethanen zu Bekämpfung von Parasiten, wobei die Formkörper Bänder, und Medaillons sind. DE 19529409A1 beschreibt thermoplastische und biologisch abbaubare Polymere, die u.a. zur verzögerten Freisetzung von Wirkstoffen geeignet sind.

DE 198 34025 A1 beschreibt Mikrokapseln zur kontrollierten Wirkstoffabgabe. DE 4206856 A1 beschreibt Fasern zum Schutz vor Motten.

Die Patentschrift JP 01266210 A beschreibt bakterielle und fungizide Garne. WO 99131963 beschreibt Polymerfasern für das Wachstum von Pflanzen und als Bodenersatz, als Kultivationsmedium, welches Wachstumsmittel enthält.

DE 101 22 753 A1 beschreibt mikrobakterielle Fasern und Gewebe für Textilien. EP 0799928 A1 beschreibt faserförmige Materialien, die antibakteriell und antifungal ausgerüstet sind für Anwendungen in Filtern.

DE 101 16751 A1 beschreibt ebenfalls bioaktive Faserprodukte, die antibakterielle und fungizide Wirkungen zeigen für den Textilbereich. JP 08120524 A beschreibt hohle Polymerfasern, die im Kern Insektizide oder Geschmackstoffe enthalten, wobei die Freisetzung durch die Polymerwand kontrolliert wird.

JP 077268772 A beschreibt Hohlfasern im Bereich zwischen 7 und 150 Mikrometer, die im Inneren Parfüme, antibakterielle bzw, fungizide Agentien enthalten. JP 05311509 A beschreibt schließlich synthetische Acrylgarne mit insektiziden Eigenschaften und guter Färbbarkeit.

DE 196 40 268 (BASF) beschreibt folienumhüllte Düngemittel, umfassend einzeln umhüllte Volumina einer nährstoffhaltigen Substanz, wobei die die nährstoffhaltige Substanz umhüllende Folie ein wasserdurchlässiges Polymer enthält, was vorzugsweise biologisch abbaubar sein soll. Das Verfahren zur Herstellung dieser Düngemittel ist recht aufwendig, da zuerst die Volumina auf eine erste Folie aufgebracht, dann eine zweite Folie aufgebracht wird und dann durch einzelnes Schweißen oder dergleichen Verfahren die beiden Folien in den Bereichen zwischen den Volumina verbunden werden müssen.

Zwar weist der Gegenstand dieser DE 196 40 268 angeblich gegenüber den Erfindungsgegenständen der dort genannten Schriften z.B. DE-OS 40 35 223, WO 91/01086, oder US 4,845,888 den Vorteil auf, dass die Wirkstoffe (Dünger), dass die Freisetzung sofort nach Ausbringung und gezielt erfolgt, im Gegensatz zu den Freisetzungsprofilen der oben genannten Schriften, wonach die Freisetzung zunächst gar nicht und nach Perforation oder Verrottung der Träger in den oben genannten Schriften innerhalb kürzester Zeit frei gesetzt werden, jedoch weist der Gegenstand der DE 196 40 268 neben einer begrenzten Auswahlmöglichkeit bzgl. der geeigneten Polymermaterialien (Wasserdampfdurchlässigkeit nicht oberhalb von 100 g/(m² und Tag)) den Nachteil auf, dass die "Einstellbarkeit" der Freisetzung in Folge von "Transportblockaden" (Diffusion wurde als hauptsächlicher Transporteffekt genannt) schwierig ist. Bei der angegebenen Größe der "Volumina", d. h. der Bereiche mit Düngemitteln von 20 cm² können sich schnell sehr große "Transportstrecken" vom Bereich hoher Düngemittelkonzentration bis zur Wandung der Folie ergeben. Schon daher wären also generell kleiner strukturierte Träger vorzuziehen.

Keine dieser oben beschriebenen Stoffe oder Träger, Verfahren, insbesondere zur Ausbringung, und Methoden, insbesondere zur verzögerten Freisetzung, ist in der Lage, landwirtschaftliche Wirkstoffe, z. B. agrochemische Funktionsstoffe wie z.B. Pheromone, Insektizide, Fungizide **großflächig oder/und sehr gezielt und mit sehr geringem Wirkstoffeinsatz pro Fläche, oder/und mit sehr starker zeitlicher Retardierung, oder/und** mit hoher räumlicher Homogenität in der Landwirtschaft, Forstwirtschaft oder im Garten loco-regional gezielt dem Boden bzw. oder/und insbesondere den Pflanzen zuzuführen, die Wirkstoffe bei verschiedenen Witterungsverhältnissen vor Ort zu halten, sich dem Pflanzenwuchs anzupassen und am Ende der Wachstumszeit in biologisch unbedenkliche Stoffe zu zerfallen oder sich ganz in die in der Natur natürlich vorkommenden Stoffe und den dort anzutreffenden Konzentrationen zu zersetzen.

Formkörper wie die im Stand der Technik bekannten, Folien, Bänder, Medaillons, Hohlfasern, Fasern im Durchmesserbereich deutlich oberhalb von 1 Mikrometer erfüllen diese Ansprüche bei weitem nicht. Ganz wesentlich für die Einstellung der Freisetzung ist in allen Fällen das Verhältnis von Oberfläche zu Volumen des Trägers. Dieses Verhältnis ist besonders günstig bei nanostrukturierten Fasern und nimmt sehr stark mit abnehmendem Faserdurchmesser zu.

Als Ergebnisse der "Nano-Forschung" sind schon einige prinzipiell geeignete Träger von Wirkstoffen und deren Herstellverfahren bekannt.

Ein besonders günstiges Verfahren sowohl zur schonenden Einbettung der Wirkstoffe in den Träger als auch zur Kontrolle der Faserdurchmesser bis in den Nanometerbereich herab stellt das *Elektrospinnen* dar.

Details zum Process des Elektrospinnen oder Electro Spinning werden z.B. beschrieben in D.H. Reneker, I. Chun, Nanotechn. 7, 216 (1996) oder Fong, H.; Reneker, D.H.; J. Polym. Sci, Part B 37 (1999), 3488 und in DE 100 23 45 6 (=WO01/09414 A1).

Die Faserbildung erfolgt im Fall des Elektrospinnens mittels einer hohen elektrischen Spannung, angelegt zwischen einer Düse und einer Gegenelektrode (siehe Literaturverzeichnis 1-10). Das zu verspinnende Material liegt dabei in Form einer Schmelze oder/und einer Lösung vor und wird durch die Düse transportiert. Das elektrische Feld führt über induzierte Ladungen zu einer Deformation des aus der Düse austretenden Tröpfchens, es bildet sich ein feiner Materialstrom, der in Richtung auf die Gegenelektrode beschleunigt wird. Der Materialstrom wird dabei deformiert, verästelt sich - wie bei Blitzentladungen - und wird schließlich auf einem Substrat abgeschieden. Während des Spinnvorgangs verdunstet das Lösungsmittel bzw. erkaltet die Schmelze.

Abgeschieden werden die Fasern mit einer Geschwindigkeit von mehreren Metern pro Sekunde, die Fasern selbst können bis zu einer Länge von mehreren Metern hergestellt werden. Das Endergebnis ist ein sehr feines Fasergespinst auf dem Substrat. Durch Einstellung der Konzentration der Lösung, des angelegten Feldes, der Temperatur, über die Verwendung von Zusatzstoffen und weiterer Parameter, wie zusätzliche Elektroden, der Viskosität, der Verarbeitungstemperatur etc., lassen sich die erzielten Durchmesser der Fasern in einem weiten Bereich einstellen. Fasern bis zu einigen Nanometer herab sind erhältlich; dabei können auf dem Substrat oder der Zielfäche großflächige Faseranordnungen bis in den Quadratmeter-Bereich herauf abgeschieden werden.

Fasern aus amorphen oder teilkristallinen Polymeren, aus Blockcopolymeren, aus Polymerlegierungen können auf diese Weise erzeugt werden. So wurden z.B. Nanofasern aus so unterschiedlichen natürlichen und synthetischen Polymeren erzeugt wie Polyamiden, Polycarbonat oder Polymethylmethacrylat, aus Polynorbornen, aus Polyvinylidenfluorid, aus Cellulose, aus Polylactiden. Notwendig ist für das jeweilige Material die genaue Einstellung der Kontrollparameter für das Elektrospinnen. Beispiele sind das Elektrodenmaterial, die Elektrodenform und -anordnung, die Gegenwart von Hilfselektroden und Steuerelektroden, die Viskosität der Schmelze bzw. Lösung des Templatmaterials sowie deren Oberflächenspannung und Leitfähigkeit. Werden diese Parameter nicht optimal gewählt, dann werden eher Tropfen als Fasern abgeschieden, der Durchmesser liegt im Mikrometerbereich oder die Faserdurchmesser schwanken stark. Für die Eigenschaften der Fasern ist es von Bedeutung, dass es während des Elektrospinnens partiell zu einer Orientierung der Kettenmoleküle in den Fasern kommt, wie über Elektronenbeugung an einer Faser mit einem Durchmesser von etwa 50 nm gezeigt wurde. Die erhaltenen Orientierungen sind durchaus von gleicher Größenordnung wie die von kommerziellen schmelze-extrudierten Fasern.

Ein großer Vorteil des Elektrospinnens ist es, dass auch Wasser als Lösungsmittel verwendet werden kann, so dass wasserlösliche Polymeren, auch wasserlösliche biologische Systeme versponnen werden können. Beispiele sind das Polyvinylalkohol, Polyvinylpyrrolidon, Polyethylenoxid. Je nach Anordnung und Form der Elektroden werden Gewebe erhalten, aber auch parallele Stränge.

Beispiele für diesbezügliche Ergebnisse der "Nanoforschung" sind:
i) die DE 100 23 456 A1 (WO 01/09414 A1) (TransMlT, "Meso- und Nanoröhren"), worin Hohlfasern mit einem Innendurchmesser von 10 nm bis 50 µm und einer Aussenwand, aufgebaut aus metallhaltigen anorganischen Verbindungen, Polymern und/oder Metallen vorgeschlagen werden, welche nach einem ersten Verfahren dadurch herstellbar sind, dass eine Faser aus einem ersten abbaubaren Material mindestens eine Beschichtung aus mindestens einem weiteren Material erhält und anschließend das erste Material mit der Maßgabe abgebaut wird, daß die so erhaltene Hohlfaser einen Inndendurchmesser von 10 nm bis 50 µm aufweist.
   Als zweite Lösung wird in der oben genannten Schrift ein Verfahren vorgeschlagen, wonach eine Faser eines ersten nicht abbaubaren Materials nacheinander mit einem zweiten, abbaubaren Material und mindestens einem weiteren Material beschichtet wird und das zweite abbaubare Material mit der Maßgabe abgebaut wird, das bezogen auf das mindestens eine weitere Material eine Hohlfaser mit einem Innendurchmesser von 10 nm bis 50 µm und einem Kern aus dem ersten Material erhalten wird. Der Gegenstand dieser Schrift wurde gemäß Anspruch 21 auch für den Einsatz im Bereich "Controlled Release" vorgesehen.
ii) die DE 100 40 897 A1 (WO 02/16680 A1) (TransMIT, "Herstellung von Polymerfasern mit nanoskaligen Morphologien"), worin poröse Fasern aus polymeren Materialien vorgeschlagen werden, die Fasern mit Durchmessern von 20 bis 4.000 nm und Poren (etwa zur Aufnahme von Wirkstoffen) in Form von mindestens bis zum Fasernkern reichenden und/oder durch die Faser reichenden Kanälen aufweisen. Diese Fasern sind gemäß Anspruch 7 der obigen Schrift dadurch herzustellen, dass eine 5 bis 20 Gew.-%-Lsg. mindestens eines Polymeren in einem leicht verdampfbaren organischen Lösungsmittel oder Lösungsmittelgemisch mittels Elektrospinning bei einem Feld über 10^5 V/m versponnen wird, wobei die resultierende Faser einen Durchmesser von 20 bis 4.000 nm und Poren in Form von mindestens bis zum Faserkern reichende und/oder durch die Faser reichenden Kanälen aufweist. Damit sind Oberflächen von 100 bis zu 700 m²/g realisierbar. Nach einem bevorzugten Ausführungsbeispiel des Gegenstandes dieser Schrift (Spalte 4, Absätze [0028] und [0029] sind durch Verwerdung von zwei Polymeren (eines wasserun- und eines wasserlöslichen) auch Fasern herstellbar, weiche zunächst keine Kanäle aufweisen. Diese zeigen sich jedoch ebenfalls Poren oder Kanäle auf, wenn durch Einwirkung von Wasser die wasserlöslichen Polymere aus den Ihnen zugeordneten Poren/Kanälen gelöst werden. Für die genaueren Herstellbedingungen sei auf diese Schrift verwiesen.

Wird die Oberfläche strukturiert, dann ändert sich z. B. das Benetzungsverhalten, das Lösungsverhalten und das Abbauverhalten, das Adsorptionsverhalten, das Verhältnis von Oberfläche zu Volumen. Das Konzept ist, eine während des Elektrospinnens einsetzende Phasenseparation gezielt zur Erzeugung von solchen Oberflächenstrukturen zu verwenden (8-10). Hier bietet sich zum einen die Verwendung eines binären Systems Polymer/Lösungsmittel an. Bei leicht flüchtigen Lösungsmitteln kommt es beim Elektrospinnen zu einer Verarmung des Lösungsmittels und damit unter bestimmten Bedingungen zu einer Phasenseparation, zur Ausbildung einer bestimmten Phasenmorphologie, die dann schließlich zu einer entsprechenden Strukturierung der Fasern führt. Bemerkenswert ist die Regelmäßigkeit der sich ausbildenden Struktur. Diese kann daher sehr gut zur Herstellung gleich bleibender, retardierender Träger genutzt werden. Die Poren besitzen einen ellipsoidalen Querschnitt, wobei diese z. B. in Richtung der Faserachse etwa 300 nm lang und senkrecht dazu 50 nm bis 150 nm breit sind. Der zweite Weg (siehe oben DE 100 40 897 A1) sieht die Verwendung von ternären Systemen Polymer1/Polymer2/Lösungsmittel vor. Bei der Fasererzeugung tritt eine Entmischung der beiden Polymeren auf, wenn sie unverträglich sind. Es entstehen Fasern mit einer binodalen (disperse Phase/Matrixphase) oder auch kokontinuierlichen spinodalen Struktur. Solche Compositefasern sind für sich allein genommen bereits interessant. Entfernt man selektiv eine der beiden Komponenten, dann entstehen Fasern mit spezifischer Oberflächenstrukur.

Ungelöst war bislang jedoch insbesondere die Aufgabe, wie solche nanoskaligen Fasern (Dicke bis zu 50µm) als Träger in der gewünschten "Großflächigkeit" und Homogenität betreffend Ackerflächen ohne Pflanzenbesatz oder, wie diese Träger in der gewünschten "Gezieltheit" auf Pflanzen oder gar auf Pflanzensamen ausgebracht werden können, wobei auch der Wirkstoffeinsatz pro Zielfläche (Acker-, Pflanzen-, oder Samenoberfläche) minimiert sein sollte.

### [Aufgabe]

Aufgabe der vorliegenden Erfindung war es daher,
a) geeignete Träger landwirtschaftlicher Wirkstoffe vorzusehen, welche eine Verbesserung der Einstellbarkeit der Freisetzung ermöglichen
   und ein Verfahren, mit welchem die wirkstoff-beladenen oder -unbeladenen Träger wirtschaftlicher großflächig und sehr zielgenau mit hoher Homogenität sowie geringem Wirkstoffeinsatz pro Zielfäche ausgebracht werden kann, und
b) eine Vorrichtung vorzusehen, mit welchem die wirkstoff-beladenen oder - unbeladenen Träger nach dem erfindungsgemäßen Verfahren zielgenau und dessen weiteren Vorteilen ausgebracht werden können.

### [Lösung der Aufgabe]

Überraschenderweise hat man nun festgestellt, dass man mit nanoskaligen und/oder nanostrukturierten Polymerfasern eine deutlich verbesserte Einstellbarkeit der Freisetzung landwirtschaftlicher Wirkstoffe erzielen kann.

Ebenso überraschenderweise hat man festgestellt, dass man mit einem modifizierten Elektrospinningverfahren unter Verwendung des Ackerbodens oder einer oder/und mehrerer Pflanzen oder/und Pflanzensamen als Gegenelektrode eine - im Falle des reinen Ackerbodens- sehr homogene, großflächige Ausbringung von Trägern (beladen oder unbeladen mit Wirkstoffen) bei sehr hoher Zielgenauigkeit und geringem Einsatz von Wirkstoffen pro Zielfläche bei gleichzeitig wirtschaftlich günstigeren Bedingungen realisieren kann.

Bei Testversuchen ist es ebenfalls überraschenderweise gelungen, andere ähnlich wasserhaltige biologische Systeme, wie z.B. die Gliedmaßen (Hände, Füße, Arme, Beine) oder auch andere zentrale Körperteile von Menschen oder Tieren relativ zielgerichtet "bespinnen" zu können. Dies wird auf die gute Induzierbarkeit einer elektrischen Polarisierung des Wassers in diesen biologischen Systemen zurückgeführt. Insgesamt wurde daraufhin auch gefunden, das sich generell dielektrische Substanzen oder auch ferroelektrische Kristalle hervorragend als Zielflächen für das Elektrospinning von polymeren Lösungen oder/und Schmelzen eignen.

Mit dieser Teilerfindung ist es dann auch möglich den Prozess des Beschichtens oder des "Bespinnens" von Pflanzen in Abhängigkeit vom Feuchtigkeitsgehalt der Zielfächen zu gestalten, d.h. ohne den Einsatz von zusätzlichen Sensoren. Damit weist eine entsprechend erfindungsgemäße Vorrichtung den Vorteil auf, dass z.B. bei der relativen Bewegung dieser Vorrichtung über einen Acker mit einer Reihe von beabstandeten Pflanzen nur bei den Pflanzen ein Spinning-Prozess gestartet wird, welche aufgrund eines ausreichenden Wassergehaltes einen ausreichend starken Gegenpol zu dem an der Düse der Elektrospinningapparatur angelegten elektrischen Potential bildet.

Bei einem Acker ohne Pflanzen könnten damit auch der Prozess einer automatische Bespinnung nur der Ackerbereiche durchgeführt werden, welche einen ausreichend hohen Feuchtigkeitsgehalt aufweisen.

Das teilerfindungsgemäße Verfahren ist damit wie folgt gegeben:

Verfahren zur Beschichtung von pflanzlichen Zielftächen mit nanoskaligen Fasern, wobei die Zielflächen einem elektrischen Potential und damit einem elektrischen Feld ausgesetzt werden und ausgehend von einer Düse, welche sich auf einem höheren elektrischen Potential als die Zielfläche befindet, eine einen Polymeren enthaltende Lösung oder Schmelze auf die Zielfläche angegeben wird, **dadurch gekennzeichnet,** dass die nanoskaligen Fasern nanoskalige Polymerfasern, -röhren oder nanoskaligen Hohlfasern mit und/oder ohne nanoskaligen Morphologien sind, die als Träger für landwirtschaftliche oder landwirtschaftlich nutzbare Wirkstolfe dienen, dass die Fasern oder Röhren einen Durchmesser von 10 nm bis 6 µm aufweisen und bioabbaubar sind, d.h. unter den natürlichen Umweltbedingungen abbaubar sind, dass die Fasern oder Röhren eine Oberfläche von 100 bis 700 m²/g aufweisen und dass die Freisetzung der Wirkstoffe aus oder von den Fasern oder aus oder von den Röhren durch Abbau der Fasern unter Diffusion oder/und Permeation erfolgt.

Bezüglich der weiter oben genannten Aufgaben ist festzuhalten, dass obigen Aufgaben a) und b) gelöst werden durch die Gegenstände der Ansprüche 1) und 14).

### Zur Lösung der Aufgabe a)

(Vorsehung von Trägern für landwirtschaftliche Wirkstoffe und Vorsehung eines Verfahrens zur Ausbringung solcher Träger)
werden nanoskalige Polymerfasern (bis zu einer Dicke von 50 µm), welche durch den bekannten Prozess des Elektrospinnings erzeugt wurden, vorgeschlagen.

Bevorzugt vorgeschlagen werden nanoskalige Polymerfasern mit einem Durchmesser
i) von 10 nm bis zu 50 µm, wie sie aus der DE 100 234 56 A1 (TransMIT, "Meso- und Nanoröhren") bekannt sind,
   und
ii) von 10 bis 4.000 nm, wie sie aus der DE 100 40 897 A1 (TransMlT, "Herstellung von Polymerfasern mit nanoskaligen Morphologien") bekannt sind.

Zur Beschichtung der Meso- und Nanoröhren aus der DE 100 234 56 A1 sei auf die Seite 3 und 4 dieser Schrift verwiesen. Mit den dort genannten Verfahren oder anderen Verfahren zur Funktionalisierung der Röhren können, wie in der Schrift erwähnt, auch solche Wirkstoffe wie Agrochemikalien oder die hier genannten Wirkstoffe oder auch medizinische in den Hohlfasern fixiert werden. Schließlich kann auch die Außenwand der dort genannten Fasern aus einer biologisch abbaubaren Schicht, d.h. unter solchen Bedingungen abbaubar, wie sie in der Landwirtschaft anzutreffen sind, bestehen. Beispiele für etwa wasserlösliche Materialien sind das Polyvinylalkohol, Polyvinylpyrrolidon, Polyethylenoxid.

Die Polymerfasern mit nanoskaligen Morphologie, gemäß der DE 100 40 897 A1, lassen sich wie dort auf Seite 4 dargestellt, auch mit wasserlöslichen Polymerkomponenten (Beispiele siehe dort) herstellen. Diese sind zuvor mit den hier dargestellten landwirtscttaftlichen Wirkstoffen mischbar. Insgesamt können so nanoskalige Morphologien erzeugen, aus welchen dann zeitlich retardiert die gewünschten landwirtschaftlichen oder auch medizinischen Wirkstoffe austreten. Die genannten nanoskaligen Fasern lassen sich durch die bekannten Methoden (siehe oben 1) bis 3)), d.h. durch Sprühen, Vernebeln, Streuen, etc. auf Feldern ausbringen.

Im Stand der Technik ist die Elektrospinning-Technik bekannt (DE 100 23 456 "Meso- und Nanoröhren" verweist für die Grundlagen zu dieser Technik beispielhaft auf die EP 0 005 035, EP 0 095 940 und US 5 024 789 oder WO 91/01695. Der generelle Vorteil des Elektrospinningverfahrens besteht darin, dass mit diesem Verfahren - im Vergleich zum Stand der Technik, wie anderen Spinnverfahren, wie z. B. dem Extrusionsspinnverfahren - deutlich dünnere Fasern herstellbar sind und die so gewonnenen Fasern ein deutlich höheres Oberflächen- zu Volumen-Verhältnis aufweisen.

### Zur Lösung der Aufgabe

war es entscheidend, dass überraschenderweise das an sich bekannte Verfahren des Elektrospinnings auch ausserhalb von Laborbedingungen und auch mobil und mit der nötigen Ausbringungsgeschwindigkeit durchführbar ist und eine regelrechte zielgerichtete "Einspinnung" von einzelnen Pflanzen oder Samen (in der geöffnete Ackerfurche und vor dem Zudecken mit Acker, oder auch vor der Verbringung auf einen Acker), möglich ist. Auch bei relativer Bewegung von Pflanzen/Samen oder Ackerboden im Verhältnis zu der ElektrospinningApparatur können mehr als 10.000 qm eines "Nano-Gespinstes" pro Tag ausgebracht werden.

Dabei wird der Ackerboden oder/und Pflanzen oder/und Samen als Gegenelektrode genutzt Gegebenenfalls sind zusätzliche Gegenelektroden im Umfeld der Pflanzen oder der Samen vorzusehen, um die Zielführung des Spinningprozesses zu verbessern.

Das Verfahren sieht eine Einbindung der Wirkstoffe in die polymeren Nanofasern durch Vermengen oder Vermischen des Polymeren (oder Polymerengemisches) und seines Lösungsmittels (oder Lösungsmittelgemisches) oder seiner Schmelze (oder Schmelzgermisches) mit den gewünschten landwirtschaftlichen Wirkstoffen vor dem Prozess des eigentlichen Verspinnens vor.

Die Freisetzung der Wirkstoffe kann z.B. über Diffusion und Abmessungen der Fasern, Abbau der Fasern, Auflösung der Fasern oder Permeation aus den Fasern heraus kontrolliert werden.

Ein weiterer Vorteil des Verfahrens ist es, dass der Prozess der Einbindung der Wirkstoffe in die Trager und die Ausbringung der Träger/des Wirkstoffsystems in die Natur **vor Ort** (keine getrennte Verpackung und Lagerung der Träger und Wirkstoffe etc.) und **in einem Schritt** erfolgen kann.

Die Hinzufügung einer weiteren biologisch abbaubaren Beschichtung, etwa zum Zwecke der noch feineren Steuerung der Diffusion oder der Permeation der Wirkstoffe oder zum Schutz der Fasern z.B. vor UV-Strahlung (bei Austragung/Aufbringung der Fasern auf Pflanzen) kann etwa durch Verfahren der Gasphasenabscheidung, welche dann nach dem Austritt der Faser aus der Spinndüse erfolgt oder durch andere nicht das elektrische Feld beeinflussende Abscheidungsverfahren erfolgen.

Darüber hinaus, kann eine weitere Beschichtung auch durch einen weiteren E-lektrospinnprozess erfolgen, wobei die aus der ersten Düse austretende Faser ein solches Potential aufweist, dass Polymere mit den gewünschten Beschichtungsmaterialien aus einer zweiten Düse austretend auf der ersten Faser abgeschieden werden.

Ein weiteres als Co-Elektrospinning bekanntes Verfahren (siehe "Compound Core-Shell Polymer Nanofibers by Co-Electrospinning", Zaicheng Sun, Eyal Zussman, Alexander L. Yarin, Joachim H. Wendorff, Andreas Greiner; Adv. Mat. 15(22), S. 1929-1932 (2003)) sieht vor eine Kern- und eine Hüll-Faser im Wesentlichen gleichzeitig durch Elektrospinning herzustellen. Dazu wird, wie in der obigen Schrift unter Fig. 1 dargestellt, an zwei coaxial zueinander und ineinander angeordnete spritzenartige Behälter, welche getrennte Kammern zur Aufnahme von zwei gleichen oder verschiedenen Polymeren (oder -gemischen, in Lösung oder/und in Schmelze) aufweisen, das gleiche elektrische Potential angelegt. Jedoch wurde als Gegenelektrode mit anderem elektrischen Potential eine metallische Platte in Form einer Kupferplatte verwendet. Mit dem dort geschilderten Verfahren konnten sogar ansonsten nicht elektrisch verspinnbare Polymere oder Stoffe (oder deren Gemische), wie Poly(dodecylthiophene) (PDT) in Chloroform-Lösung oder sogar Metallsalz-Lösungen, wie Pd(OAc)₂ in Tetrahydrofuran-Lösung als innere Kernfaser mit elektrisch verspinnbaren Polymeren als Hüll-Faser (im ersten Fall mit Poly(ethylen oxid) in Chloroform-Lösung und im zweiten Fall mit Poly(I-latid) in Chloroformlösung) elektrisch versponnen werden.

Dieses Verfahren eignet sich daher besonders auch als Verfahren zur Beschichtung von elektrisch nicht oder schlecht spinnbaren Polymeren.

Besonders geeignet als Schutzadditiv gegen UV-Einstrahlung ist z.B. eine Beschichtung aus ZnOₓS₍₁₋ₓ₎, vorzugsweise in kristalliner Form, ganz besonders bevorzugt in kristalliner Form nach dem Wurtzit-Typ, wobei diese Beschichtung auch vor Ort (also in-situ, siehe oben) erfolgen kann. Zur Herstellung wird das Substrat, in diesem Fall die nanoskaligen Fasern, mit einem der bekannten Dünnschicht-Depositionsverfahren, z.B. mit der Sputtertechnik, der chemischen Abscheidung aus Gasphasen (CVD, MOCVD), durch Aufdampfen, durch Pyrolyse mit der neuartigen Schicht beschichtet. Überraschenderweise wurde festgestellt, dass sich das Mischsystem ZnOS komplett mischbar als kristalline Dünnschicht synthetisieren lässt und bei der Herstellung die Anteile von O und S in ganzen Bereich (von x=0 bis x=1) einstellen lassen, wobei die daraus resultierende optische Funktionsschicht eine scharfe Absorptionskante mit sehr hoher Transmission bei höheren und sehr geringer Transmission bei niedrigeren Wellenlängen -ihm Vergleich zur Absorptionskante- aufweist.

Zur Retardierung der Freisetzung von Wirkstoffen, hier auch von landwirtschaftlichen Wirkstoffen, ist ganz besonders die Permeation der Wirkstoffe (ggf. in Lösung mit anderen Polymeren) durch Polymerfilme geeignet.

Geeignete Polymerfilme zur Retardierung der Freisetzung durch Permeation (und/oder Diffusion) bestehen aus, oder enthalten:

Polymere wie Poly-(p-xylylene), Polyvinylidenhalogenide, Polyester, Polyether, Polyolefine, Polycarbonate, Polyurethan, natürliche Polymere, Polycarbonsäuren, Polysulfonsäuren, sulfatierte Polysaccharide, Polylactide, Polyglycoside, Po lyamide, Polyvinylalkohole, Poly-α-Methylstyrole, Polymethacrylate, Polyacrylnitrile, Poly-(p-xylyle), Polyacrylamide, Polyimide, Polyphenylene, Polysilane, Polysiloxane, Polybenzimidazole, Polybenzthiazolene, Polyoxazole, Polysulfinide, Polyesteramide, Polyarylenvinylene, Polyetherketone, Polyurethane, Polysulfone, Ormocerene, Polyacrylate, Silicone, vollaromatische Copolyester, Poly-N-vinylpyrrolidone, Polyhydroxyethylmethacrylate, Polymethylmethacrylate, Polyethylenterephthalate, Polymethacrylnitrile, Polyvinylacetate, Neopren, Buna N, Polybutadien, Polytetrafluorethylen, modifizierte oder nicht modifizierte Cellulosen, α-Olefine, Vinylsulfonsäuren, Maleinsäuren, Alginate oder Collagene,

Die Monomere, welche den Polymeren zu Grunde liegen, können je eine oder mehrere funktionelle Gruppen tragen, wobei es sich jeweils um einen einzigen oder verschiedene Typen von Substituenten handeln kann. Es handelt sich um folgende funktionelle Gruppen:

H, lineares oder verzweigtes Alkyl, Alkenyl, Alkinyl, Cycloalkyl, Cycloalkenyl, Cycloalkinyl, Phenyl, Phenylalkyl, Phenylalkenyl, Phenylalkinyl, Phenylcycloalkyl, Phenylcycloalkenyl, Phenylcycloalkinyl, Cycloalkyl-alkyl, Cycloalkyl-alkenyl, Cycloalkyl-alkinyl, heterocyclische Verbindung, Heterocyclo-Alkyl, Heterocyclo-Alkenyl, Heterocyclo-Alkinyl, lineares oder verzweigtes Alkylsulfonat, Alkenylsulfonat, Alkinylsulfonat, lineares oder verzweigtes Alkylbenzolsulfonat, Alkenylbenzolsulfonat, Alkinylbenzolsulfonat, Aminosulfonyl-alkyl, Aminosulfonyl-alkenyl, Aminosulfonyl-alkinyl, Aminosulfonyl-cycloalkyl, Aminosulfonyl-cycloalkenyl, Aminosulfonyl-cycloalkinyl, lineares oder verzweigtes Alkyl-sulfonamid, Alkenyl-sulfonamid, Alkinyl-sulfonamid, Cycloalkyl-sulfonamid, Cycloalkenyl-sulfonamid, Cycloalkinyl-sulfonamid, Phenyl-sulfonamid, Heterocyclo-sulfonsäure, Heterocyclo-sulfonamid, Heterocyclo-alkyl-sulfonsäure, Heterocyclo-alkyl-sulfonamid, Heterocyclo-alkenyl-sulfonsäure, amid- oder esterartig gebundene lineare und/oder verzweigtkettige aliphatische Sulfon-, Carbon- und/oder Phosphonsäure, Styrolsulfonsäure, Anetolsulfonsäure, Styrolphosphonsäure, Heterocyclo-alkenyl-sulfonamid, Heterocyclo-alkinyl-sulfonsäure, Heterocyclo-alkinyl-sulfonamid, Aryl-sulfonsäure, Aryl-sulfonamid, Aryl-alkyl-sulfonsäure, Aryl-alkyl-sulfonamid, Aryl-alkenyl-sulfonsäure, Aryl-alkenyl-sulfonamid, Aryl-alkinyl-sulfonsäure, Aryl-alkinyl-sulfonamid, Alkyl-, Alkenyl, Alkinyl-, Aryl-, Heteroalkyl-, Heteroarylcarbonsäuren, deren zugehörige Ester, zugehörige Carbonsäureamide, Aminosäuren, orthologe Phosphonsaurederivate aller genannten Sulfonsäuren, Hydroxy-alkyl-, Hydroxy-alkenyl-, Hydroxy-alkinyl-, Hydroxy-cycloalkyl-, Hydroxy-alkylcycloalkyl-, Hydroxy-cycloalkyl-alkyl-, Hydroxy-phenyl-, Hydroxy-alkyl-phenyl-, Hydroxy-phenyl-alkyl-Gruppen sowie die orthologen Amino- und Thioverbindungen, Polyethoxy-alkyl, Polyethoxy-alkenyl, Polyethoxy-alkinyl, Polyethoxycycloalkyl, Polyethoxy-cycloalkenyl, Polyethoxy-cycloalkinyl, Polyethoxy-aryl, Polyethoxy-alkyl-aryl, Polyethoxy-heterocycloalkyl, Polyethoxy-heterocycloaryl, Alkenal, Alkenal, Alkinal, Cycloalkenal, Benzylcarbaldehyd, Heteroaryl-carbaldehyd, Benzyl-alkyl-carbaldehyd, Heteroaryl-carbaldehyd, aliphatisches Heteroalkyl-alkenal, Hetero-alkenyl-alkenal, Hetero-alkinyl-alkenal, Alkanon, Alkenon, Alkinon, Cycloalkyl-alkanon, Dicycloalkanon, Arylalkanon, Heteroarylalkanon, Imine. Halogene und halogenierte Derivate aller aufgeführten Gruppen, Nitrile, Isonitrile. Sulfonsäureester, Phosphonsäureester, Nitroverbindungen, Hydroxylamine, Allylverbindungen, Adenosin-3',5'-monophosphat, Adenosin-3',5'-diphosphat, Adenosin-3',5'-triphosphat, Guanosin-3',5'-monophosphat, Guanosin-3',5'-diphophat, Guanosin-5',5'-triphosphat, Dextransulfatcellulose, kationenaustauschende Gruppen, anionenaustauschende Gruppen. Bevorzugt steht dabei
- Alkyl für eine Gruppe mit 1 bis 20 Kohlenstoffatomen
- Alkenyl und Alkinyl für eine ein- oder mehrfach ungesättigte Gruppe mit 3 bis 20 Kohlenstoffatomen
- die heterocyclischen Gruppen für einen Rest mit 1 bis 20 Kohlestoffatomen, worin bis zu 5 Kohlenstoffatome durch Heteroatome ersetzt sein können, die ausgewählt sind aus der Gruppe Stickstoff, Sauerstoff, Schwefel, Phosphor
- Aryl für einen aromatischen Rest mit 5 bis 20 Kohlenstoffatomen Heteroaryl für einen entsprechenden aromatischen Rest, in dem bis zu 5 Kohlenstoffatome durch Heteroatome aus der Gruppe Stickstoff, Sauerstoff, Schwefel, Phosphor ersetzt sein können.

Solche Filme sind, wie z.B. am Beispiel der Polylactide weiter unten gezeigt, schon per Elektrospinning hergestellt worden, insbesondere in Form von Hohlfasern, d.h. die Wandung der Hohlfasern bildete den als Permeationsbarriere wirkenden Polymerfilm. Solche Filme sind aber auch durch das Verfahren des Co-Elektrospinning als elektrogesponnene Hüllschicht auf einer elektrogesponnenen Kern-Faser anbringbar.

**Zur Lösung der Aufgabe b) (Vorrichtung)** wird eine Elektrospinningvorrichtung vorgeschlagen, welche eine Spannungsquelle für Spannungen zwischen 1 und 100 kV abgeben kann, aufweist, sowie eine damit elektrisch verbundene Düse/Spitze/Spritze. Vorzugsweise weist die Vorrichtung Mittel zur Einlagerung, oder/und Mischung der eingesetzten Polymere, Lösungsmittel und landwirtschaftlichen Wirkstoffe auf. Die Vorrichtung zur Herstellung und Ausbringung der beladenen oder unbeladenen Träger ist vorzugsweise mobil an einem Schlepper angebracht und nutzt vorzugsweise als Energiequelle für die Erzeugung der elektrischen Spannung die gleiche Energiequelle wie der Schlepper. Alternativ weist die Vorrichtung auch Mittel zur Wandlung und ggf. Speicherung von Energie in elektrische Energie auf.

In einem vorteilhaften Ausführungsbeispiel weist die erfindungsgemäße Vorrichtung zur verbesserten Steuerung des Ausbringungsprozesses mindestens eine, mit der Vorrichtung mechanisch oder/und elektrisch verbundene Gegenelektrode auf, welches ein anderes elektrisches Potential, als die als erste Elektrode genutzte Düse oder Spitze zum Durchlass des/der Polymeren aufweist.

Werden z.B. unterhalb der über das Feld bewegten Vorrichtung zwei Gegenelektroden, jeweils eine links und rechts einer Pflanzenreihe, angeordnet, so kann ggf. unter Einsatz weiterer Steuerelektroden eine nur auf diese Pflanzen gezielte Ausbringung der Träger erfolgen.

Ein weiteres, ganz besonders vorteilhaftes Ausführungsbeispiel für das Verfahren und die Vorrichtung ergibt sich, wenn zur weiter gesteigerten spezifischen oder noch gezielteren Ausbringung, d.h. etwa in Abhängigkeit von der lokalen Bodenbeschaffenheit oder dem Zustand einer jeweiligen Pflanze oder bis herunter zum jeweiligen Blatt, ein oder mehrere optische Sensoren gemäß der DE 44 13 739 genutzt werden, um die vom Boden oder einer Pflanze oder einem Blatt ausgehende Infrarot-Strahlung zur Identifizierung einer Pflanze (gegenüber normalem Ackerboden) oder zur Identifizierung der lokalen Beschaffenheit eines Bodens oder einer Pflanze zu nutzen und entsprechende Steuer-/Regelbefehle an die Vorrichtung zurückzugeben. (Siehe Anspruch 1 für das Verfahren und Anspruch 2 und folgende der oben zitierten Schrift für die entsprechende Einrichtung).

In einem weiteren vorteilhaften Ausführungsbeispiel ist vorgesehen, dass coaxial zur ersten, dann inneren Düse/Spitze/Spritze eine zweite, dann äussere Düse/Spitze/Spritze vorgesehen ist. Jede der beiden Düsen/Spitzen/Spritzen kann zur Zuführung von Polymeren in Schmelze oder Lösung mit einem eigenen oder mit einem gemeinsamen Vorratsbehälter verbunden sein. Darüberhinaus können auch Vorratsbehälter für die Wirkstoffe vorgesehen sein.

Vorzugsweise weist die Vorrichtung darüber hinaus Druckmittel auf, welche einen oder beide der vorgesehenen Behälter unter Druck setzt, um der/den Düsen/Spritzen/Spitzen Polymere und/oder Wirkstoffe zuzuführen. Die Vermischung oder Vermengung der Polymere mit den Wirkstoffen kann dabei im Vorratsbehälter oder auf dem Strömungsweg zur Düse, etwa durch so gestaltete Ausbildung des gemeinsamen Strömungsweges von Polymer und Wirkstoff hin zur Spitze der Vorrichtung, dass Turbulenzen in der Strömung und damit eine Vermischung von Polymer und Wirkstoff zu beobachten sind.

Die beiden Düsen oder Spitzen der Vorrichtung weisen dabei das gleiche elektrische Potential auf. Zur Herstellung von mehrschichtigen Fasern kann die Vorrichtung weitere Düsen oder Spitzen aufweisen, welche um die jeweils innere angeordnet sind.

### Beispiele für landwirtschaftliche Wirkstoffe sind:

### Beispiele für Fungizide sind:

2-Aminobutan; 2-Anilino-4'-methyl-6-cyclopropyl-pyrimidin; 2',6'-Dibromo-2-methyl-4'-trifluoromethoxy-4'-trifluoromethyl-1,3-thiazol-5-carboxanilid; 2,6-Dichloro-N-(4-trifluoromethylbenzyl)-benzamid; (E)-2-Methoximino-N-methyl-2-(2-phenoxyphenyl)-acetamid; 8-Hydroxychinolinsulfat; Methyl-(E)-2- 2-[6-(2-cyanophenoxy)-pyrimidin-4-yloxy]-phenyl-3-methoxyacrylat; Methyl-(E)-methoximino[alpha-(o-tolyloxy)-o-tolyl]-acetat: 2-Phenylphenol (OPP), Aldimorph, Ampropylfos, Anilazin, Azaconazol, Benalaxyl, Benodanil, Benomyl, Binapacryl, Biphenyl, Bitertanol, Blasticidin-S, Bromuconazole, Bupirimate, Buthiobale, Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram, Dichlorophen, Diclobutrazol, Dichlofluanid, Diclomezin, Dicloran, Diethofencarb, Difenoconazol, Dimethirimol, Dimethomorph, Diniconazol, Dinocap, Diphenylamin, Dipyrithion. Ditalimfos, Dithianon, Dodine, Drazoxolon, Edifenphos, Epoxyconazole, Ethirimol, Etridiazol, Fenarimol, Fenbuconazole, Fenfuram, Fenitropan, Fenpiclonil, Fenpropidin, Fenpropimorph, Fentinacetat, Fentinhydroxyd, Ferbam, Ferimzone, Fluazinam, Fludioxonil, Fluoromide, Fluquinconazole, Flusifazole, Flusulfamide, Flutolanil, Flutriafol, Folpet, Fosetyl-Aluminium, Fthalide, Fuberidazol, Furalaxyl, Furmecyclox, Guazatine, Hexachlorobenzol, Hexaconazol, Hymexazol, Imazalil, Imibenconazol, Iminoctadin, Iprobenfos (IBP), Iprodion, Isoprothiolan, Kasugamycin, Kupfer-Zubereitungen, wie: Kupferhydroxid, Kupfernaphthenat, Kupferoxychlorid, Kupfersulfat, Kupferoxid, Oxin-Kupfer und Bordeaux-Mischung, Mancopper, Mancozeb, Maneb, Mepanipyrim, Mepronil, Metalaxyl, Metconazol, Methasulfocarb, Methfuroxam, Metiram, Melsulfovax, Myclobutanil, Nickeldimethyldithiocarbamat, Nitrothal-isopropyl, Nuarimol, Ofurace, Oxadixyl, Oxamocarb, Oxycarboxin, Pefurazoat, Penconazol, Pencycuron, Phosdiphen, Pimaricin, Piperalin, Polyoxin, Probenazol, Prochloraz, Procymidon, Propamocarb, Propiconazole, Propineb, Pyrazophos, Pyrifenox, Pyrimethanil, Pyroquilon, Quintozen (PCNB), Schwefel und Schwefel-Zubereitungen, Tebuconazol, Tecloftalam, Technazen, Tetraconazol, Thiabendazol, Thicyofen, Thiophanat-methyl, Thiram, Tolclophosmethyl, Tolylfluanid, Triadimefon, Triadimenol, Triazoxid, Trichlamid, Tricyclazol, Tridemorph, Triflumizol, Triforin, Triticonazol, Validamycin A, Vinclozolin, Zineb, Ziram, 8-tert-Butyl-2-(N-ethyl-N-n-propyl-amino)-methyl-1,4-dioxa-spiro-[4,5] decan, N-(R)-(1-(4-Chlorphenyl)-ethyl)-2,2-dichlor-1-ethyl-3t-methyl-1r-cyclopropan-carbonsäureamid (Diastereomerengemisch oder vereinzelte oder einzelne Isomere), [2-Methyl-1-[[[1(4-methylphenyl)-ethyl]-amino]-carbonyl]-propyl]-carbaminsäure 1-methylethylester und 1-Methyl-cyclohexyl-1-carbonsäure-(2,3-dichlor-4-hydroxy)-anilid.

### Beispiele für Bakterizide sind;

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Beispiele für Akarizide, Isektizide und Nematizide sind:

Abamectin, Acephat, Acrinathrin, Alanycarb, Aldicarb, Alphamethrin, Amitraz, Avermectin, Az 60541, Azadirachtin, Azinphos A, Azinphos M, Azocyclotin, Bacillus thuringiensis, 4-Bromo-2-(4-chlorphenyl)-1-(ethoxymethyl)-5-(trifluoromethyl)-1H-pyrrole-3-carbonitrite, Bendiocarb, Benfuracarb, Bensultap, Betacyfluthrin, Bifenthrin, BPMC, Brofenprox, Bromophos A, Bufencarb, Buprofezin, Butocarboxin, Butylpyridaben, Cadusafos, Carbaryl, Carbofuran, Carbophenothion, Carbosulfan, Cartap, Chloethocarb, Chloretoxyfos, Chlorfenvinphos, Chlorfluazuron, Chlormephos, N-[(6-Chloro-3-pyridinyl)-methyl]-N'-cyano-N-methyl-ethanimidamide, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin, Deltamethrin, Demeton-M, Demeton- S, Demeton-S-methyl, Diafenthiuron, Diazinon, Dichlofenthion, Dichlorvos, Dicliphos, Dicrotophos, Diethion, Diflubenzuron, Dimethoat, Dimethylvinphos, Dioxathion, Disulfoton, Edifenphos, Emamectin, Esfenvalerat, Ethiofencarb, Ethion, Ethofenprox, E-thoprophos, Etrimphos, Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Fluazuron, Flucycloxuron, Flucythrinat, Flufenoxuron, Flufenprox, Fluvalinate, Fonophos, Formothion, Fosthiazat, Fubfenprox, Furathiocarb, HCH, Heptenophos, Hexaflumuron, Hexythiazox, Imidacloprid, Iprobenfos, Isazophos, Isofenphos, Isoprocarb, Isoxathion, Ivermectin, Lambda-cyhalothrin, Lufenuron, Malathion, Mecarbam, Mevinphos, Mesulfenphos, Metaldehyd, Methacrifos, Methamidophos, Methidathion, Methiocarb, Methomyl, Metolcarb, Milbemectin, Monocrotophos, Moxidectin, Naled, NC 184, Nitenpyram, Omethoat, Oxamyl, Oxydemethon M, Oxydeprofos, Parathion A, Parathion M, Permethrin, Phenthoat, Phorat, Phosalon, Phosmet, Phosphamidon, Phoxim, Pirimicarb, Pirimiphos M, Pirimiphos A, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyrimidifen, Pyriproxifen, Quinalphos, Salithion, Sebufos, Silafluofen, Sulfotep, Sulprofos, Tebufenozide, Tebufenpyrad, Tebupirimiphos, Teflubenzuron, Tefluthrin, Temephos, Terbam, Terbufos. Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb, Vamidothion, XMC, Xylylcarb, Zetamethrin, substituierte Propargylamine, wie in DE 102 17 697 dargestellt, Dihalogenpropen-Verbindungen, wie in DE 101 55 385 dargestellt, Pyrazolylbenzylehter, wie in DE 199 61 330 dargestellt, Pyrazol-Derivate, wie in DE 696 27 281 dargestellt. Beispiele für Herbizide sind:

Anilide, wie z. B. Diflufenican und Propanil; Arylcarbonsäuren, wie z. B. Dichlorpicolinsäure, Dicamba und Picloram; Aryloxyalkansäuren, wie z. B. 2,4-D, 2,4-DB, 2,4-DP, Fluroxypyr, MCPA, MCPP und Triclopyr; Aryloxyphenoxyalkansäureester, wie z. B. Diclofop-methyl, Fenoxaprop-ethyl, Fluazifopbutyl, Haloxyfop-methyl und Quizalofop-ethyl; Azinone, wie z. B. Chloridazon und Norflurazon; Carbamate, wie z. B. Chlorpropham, Desmedipham, Phenmedipham und Propham; Chloracetanilide, wie z. B. Alachlor, Acetochlor, Butachlor, Metazachlor, Metolachlor, Pretilachlor und Propachlor; Dinitroaniline, wie z. B. Oryzalin, Pendimethalin und Trifluralin; Diphenylether, wie z. B. Acifluorfen, Bifenox, Fluoroglycofen, Fomesafen, Halosafen, Lactofen und Oxyfluorfen; Harnstoffe, wie z. B. Chlortoluron, Diuron, Fluometuron, Isoproturon, Linuron und Methabenzthiazuron; Hydroxyiamine, wie z. B. Alloxydim, Clethodim, Cycloxydim, Sethoxydim und Tralkoxydim; lmidazolinone, wie z. B. lmazethapyr, Imazamethabenz, Imazapyr und Imazaquin; Nitrile, wie z. B. Bromoxynil, Dichlobenil und loxynil; Oxyacetamide, wie z. B. Mefenacet; Sulfonylharnstoffe, wie z. B. A-midosulfuron, Bensulfuron-methyl, Chlorimuron-ethyl, Chlorsulfuron, Cinosulfuron, Metsulfuron-methyl, Nicosulfuron, Primisulfuron, Pyrazosulfuron-ethyl, Thifensulfuron-methyl, Triasulfuron und Tribenuron-methyl; Thiolcarbamate, wie z. B. Butylate, Cycloate, Diallate, EPTC, Esprocarb, Molinate, Prosulfocarb, Thiobencarb und Triallate; Triazine, wie z. B. Atrazin, Cyanazin, Simazin, Simetryne, Terbutryne und Terbutylazin; Triazinone, wie z. B. Hexazinon, Metamitron und Metribuzin; Sonstige, wie z. B. Aminotriazol, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Quinchlorac, Quinmerac, Sulphosate und Tridiphane.

Als Beispiele für Pflanzenwuchsregulatoren seien Chlorcholinchlorid und E-thephon genannt.

Als Beispiele für Pflanzennährstoffe seien Übliche anorganische oder organische Dünger zur Versorgung von Pflanzen mit Makro- und/oder Mikronährstoffen genannt.

Als Zusatzstoffe, die in den erfindungsgemässen landwirtschaftlichen Wirkstoffen bekannterweise enthalten sein können, kommen alle üblichen in derartigen Zubereitungen einsetzbaren Stoffe in Frage. Vorzugsweise in Betracht kommen Füllstoffe, aus der Kunststoff-Technologie bekannte Schmier- und Gleitmittel, Weichmacher und Stabilisierungsmittel.

Als Beispiele für Füllstoffe seien genannt:

Kochsalz, Carbonate, wie Calciumcarbonat oder Natriumhydrogencarbonat, ferner Aluminiumoxide, Kieselsäuren, Tonerden, gefälltes oder kolloidales Siliciumdioxid, sowie Phosphate.

Als Beispiele für Schmier- und Gleitmittel seien genannt:

Magnesiumstearat, Sterarinsäure, Talkum und Bentonite.

Als Weichmacher in Frage kommen alle Stoffe, die in üblicherweise für diesen Zweck bei Polyesteramiden verwendet werden.

Als Beispiele genannt seien Ester von Phosphorsäure, Ester von Phthalsäure, wie Dimethylphthalat und Dioctylphthalat, und Ester von Adipinsäure, wie Diisobutyladipat, ferner Ester von Azelainsäure, Apfelsäure, Citronensäure, Maleinsäure, Ricinolsäure, Myristinsäure, Palmitinsäure, Ölsäure, Sebacinsäure. Stearinsäure und Trimellithsäure, sowie komplexe lineare Polyester, polymere Weichmacher und epoxydierte Sojabohnenöle.

Als Stabilisierungsmittel kommen Antioxydantien und Stoffe in Frage, welche die Polymeren vor unerwünschtem Abbau während der Verarbeitung schützen. Als Farbstoffe können in den erfindungsgemässen Wirkstoffen alle für landwirtschaftliche Wirkstoffe üblicherweise einsetzbaren Farbstoffe enthalten sein. Die Konzentrationen an den einzelnen Komponenten können in den landwirtschaftlichen Wirkstoffen innerhalb eines grösseren Bereiches variiert werden.

### Herstellbeispiele für nanoskalige Polymerfasern

Beispiele zur Herstellung von nanoskaligen Polymerfasern sind aus der DE 100 40 897 A1 (TransMIT, "Herstellung von Polymerfasern mit nanoskaligen Morphologien") oder der DE 100 234 56 A1 (TransMIT, "Meso- und Nanoröhren") bekannt.

### Verfahrensbeispiele

Ein erstes Polymer wird mit Wirkstoff oder/und einem zweiten Polymer der Sorte und dann mit einem Wirkstoff vermischt oder vermengt, in eine Spinnapparatur, d.h. die Düse oder dem der Düse zugeordneten Vorratsbehälter verbracht. Es wird ein erstes elektrische Potential an der Düse und ggf. dem Vorratsbehälter angelegt, welches einen anderen Wert als die beabstandet zur Düse angebrachte oder angebrachten Zielfläche/n aufweist oder aufweisen, worauf sich an der oder den Zielflächen ein dünner, faserförmiger Formkörper aus einem Gemisch der obigen Stoffe abscheidet. Das mindestens eine Polymer kann dabei in Form einer Lösung oder einer Schmelze vorliegen, wozu im letzteren Fall eine Beheizung der Düse oder/und des Vorratsbehälters vorgesehen sei kann. Die Vermischung/Vermengung von Polymer und Wirkstoff kann aber auch innerhalb der Vorrichtung, spätestens jedoch auf dem Strömungsweg zur Düse der Vorrichtung erfolgen.

Zur Ausbringung des Wirkstoffes wird die entsprechende Vorrichtung relativ zum Ackerboden oder den daruaf befindlichen Pflanzen bewegt, wobei das Verfahren zur Anwendung bei Saatgut auch als Teilschritt eines Verfahrens zum Aussäen, wie z. B. in DE 43 39 443 (Amazonen-Werke), vorzugsweise vor Abdeckung des Saatgutes mit Ackerboden, ausgeführt werden kann. In diesem Fall dienen als Gegenelektrode die durch Säschare gebildete Furche oder/und die Samen.

Es hat sich gezeigt, dass eine Pflanze mit diesem Verfahren nahezu vollständig "eingesponnen" werden kann.

Zur Verbesserung des Grades des umfänglichen "Einspinnens" kann das Verfahren unter Bewegung der Düsen oder Spitze/Spritze der Elektrospinningapparatur relativ zur Bewegungsrichtung der Vorrichtung oder der Zielfäche, vorzugsweise oberhalb der Pflanze durchgeführt werden. Alternativ können mehrere Düsen kreisförmig oder linkes und rechts von einer oder mehreren Pflanzenreichen nebeneinander vorgesehen werden, welche auch wechselseitig in Betrieb genommen werden können, so dass eine umfängliche "Einspinnung" erfolgt. Es wurde in Versuchen gezeigt, dass 10 und mehr Düsen parallel zu einander eingesetzt werden können, wodurch dann 10 Pflanzen-Reihen oder Ackerstreifen parallel "besponnen" werden können.

Ein weiteres Beispiel zur Durchführung des Verfahrens, d.h. der "Einspinnung" von Pflanzen wird im folgenden für die Planzen Frauenhaarfarn und Bubikopfdargestellt. Zum Beleg der Haltbarkeit der Fasern als Träger in Form von nanoskaligen Polymeren wurde hier Poly(lactid) gewählt.

Es wurde kein Wirkstoff eingebunden, was aber aus dem Stand der Technik bekannt ist. So wurde von den Arbeitsgruppen der Erfindergemeinschaft bereits zahlreiche, insbesondere im Lösungsmittel der verwendeten Polymere lösbare Wirkstoffe auch medizinische Wirkstoffe, wie Dexamethason etc. eingebunden. Bei diesen Versuchen wurde, was nicht unbedingt notwendig ist, eine Gegenelektrode (zweite Elektrode) unterhalb der Pflanzen (jeweils in einem Tontopf befindlich) vorgesehen. Die erste Elektrode bestand aus einer zentral gelochten Scheibe, an der ein gegenüber der zweiten Elektrode (Gegenelektrode) geringeres elektrisches Potential (20,15 zu 30,25 kV) angelegt wurde. Die Düse wies eine metallische Spitze mit einem Durchmesser von 0,3 mm (innen) auf, welche die zentrale Öffnung der gelochten Scheibe durchdrang, und befand sich im elektrischen Kontakt mit der gelochten Scheibe (d.h. auf dem gleichen elektrischen Potential), wobei die Spitze nach unten über die Ebene der gelochten Scheibe hinausragte.

Aufgrund der geringen Viskosität der hier gewählten Polymerlösung war oberhalb der Spitze ein Vorratsbehälter in zylindrischer Form mit einem Volumen von 2 ml angebracht, so dass die Vorrichtung insgesamt die Form einer Spritze aufwies. Bei einem Kotben-Vorschub der Spritze von 1 cm/Std. konnte so bei einem Fluss der Polymerlösung von 0,7 ml/Std. ein Gleichgewichtszustand zwischen Materialentnahme durch das Elektrospinning und Zuführung durch den Kolbenvorschub erreicht werden.

Poly(lactid)-Fasem mit Durchmesser von 1 bis 2 µm wurden aus Lösung durch Elektrospinnen auf einem Frauenhaarfam und einem Bubikopf abgeschieden. Die Bedinungen beim Spinnen waren

| | Frauenhaarfam | Bubikopf |
|---|---|---|
| Konzentration der Lösung | 4 wt% | 4 wt% |
| Lösungmittel(Siedepkt.) | Dichlormethan | Dichlormethan |
| Abstand zwischen den Elektroden | 38.0 cm | 21.7 cm |
| Höhe der Pflanze | max. 38 cm | 9.2 cm |
| Durchmesser der Pflanze | max. 40 cm | 12 cm |
| | | |

| Abstand | | |
|---|---|---|
| zwischen Kanüle und Pflanze | variiert | 12.5 cm |
| Spannung (Kanüle) | 20.0 kV | 15.0 kV |
| Strom (Kanüle) | 175 nA | n.b. |
| Spannung (Gegenelektrode) | 30.0 kV | 25.0 kV |
| Strom (Gegenelektrode) | 205 nA | n. b. |

Insbesondere bei langästigen Pflanzen, wie dem Frauenhaarfarn, hat es sich gezeigt, dass eine relative Bewegung der Pflanze zur Düse (erste Elektrode) vorteilhaft ist, um die Dauer des "Einsinnens" zu verkürzen.

Zur Beständigkeit der Fasern wurde festgestellt, dass die Fasern auch nach Monaten fest an der Pflanze hafteten. Das Pflanzenwachstum - insbesondere des Bubikopfes - wurde durch die flächig abgeschiedene Fasermatte nicht beeinträchtigt.

### Vorrichtungsbeispiele

Die erfindungsgemäße Vorrichtung weist die in der Beschreibung zum Verfahren aufgeführte Mittel auf, wobei für den Betrieb lediglich eine Spannungsquelle und eine damit elektrisch verbundene Düse, Spitze/Spritze für den Durchtritt des Polymers unverzichtbar sind. Vorzugsweise ist noch mindestens ein mit der Düse in Verbindung stehender Vorratsbehälter für das Polymer und den Wirkstoff, ggf. mit Mitteln zum Mischen oder/und Mitteln zum Heizen (im Falle von Schmelzen, statt Lösungen) vorgesehen.

Für die verbesserte Kontrolle des Durchtritts des Polymer-Wirkstoff-Gemisches ist eine Druckvorrichtung vorgesehen, welche auf das Gemisch einen Druck in Richtung zur Austrittsöffnung der Düse ausübt. Diese Druckvorrichtung kann zur optimalen Kontrolle der Durchflussgeschwindigkeit des Gemisches mit einer Regelvorrichtung verbunden sein, welche selbst mit einem Signalgeber, wie Durchfluss- oder Strömungsgeschwindigkeitssensor verbunden ist.

Im Falle von Schmelzen oder auch bei stark wechselnden Betriebstemperaturen (Ausbringung im Winter/Frühjahr oder Sommer) ist es vorteilhaft die vorgesehene Heizvorrichtung zur Erwärmung der Schmelze oder des Gemisches oder der Lösung ebenfalls mit der Regelvorrichtung und einem oder mehreren Temperatursensoren zu verbinden.

Somit kann in Abhängigkeit von den tatsächliche Werten des Durchflusses oder der Strömungsgeschwindigkeit in der Düse oder Düsenspitze oder in Abhängigkeit von der oder den Temperaturen der Schmelze/des Gemisches/der Lösung die kontinuierliche Ausbringung von gleich bleibenden nanoskaligen Polymerfasern (mit oder ohne Wirkstoff) geregelt werden.

Vorzugsweise ist die Vorrichtung mobil ausgelegt so dass sie über Pflanzen oder den Ackerboden bewegt werden kann. Auch eine stationäre Vorrichtung kann vorgesehen werden, um etwa in Gewächshäusern eingesetzt zu werden, wo etwa Pflanzkästen oder dergleichen relativ zu der Vorrichtung bewegt werden können.

Auch können mit einer stationären Vorrichtung der vorgenannten Art Pflanzensamen besponnen werden, welche sich z.B. auf einem Förderband relativ zu der Vorrichtung bewegen. In beiden obigen Fällen (Gewächshaus, Einspinnung von Pflanzensamen) ist es von Vorteil, wenn die zu bespinnenden Pflanzen oder Pflanzensamen durch eine Gegenelektrode (zweite Elektrode) etwa einem Metallrahmen, um die Pflanzen etwa in den Pflanzkästen eines Gewachshauses oder um oder über einem Förderband mit darauf befindlichen Pflanzensamen einem durch diese Massnahme gerichteten elektrischen Feld ausgesetzt werden. Zur homogeneren Einspinnung der Pflanzen oder der Pflanzensamen kann es von Vorteil sein eine Wechselspannung anzulegen.

Vorzugsweise für den Einsatz auf dem Feld, bezieht die Spannungsquelle über geeignete Wandler, ihre Energie aus der Antriebsvorrichtung eines die Vorrichtung tragenden Schleppers. Zur gleichzeitigen Bearbeitung mehrerer Reihen von Pflanzen oder Feldabschnitten weist die Vorrichtung mehrere Düsen oder Schläuchen zum Austritt der Träger auf, welche z.B. in Paaren einer links und einer rechts von einer zugeordneten Pflanzenreihe angeordnet sein können.

In einem weiteren Ausführungsbeispiel sind die Düsen an beweglichen Armen angebracht, welche zum Einsatz in eine gestreckte Stellung und zum Transport der Vorrichtung über eine Straße in eine zweite Stellung verschwenkbar ausgeführt sind, wobei die Arme in letzterer Stellung parallel und nebeneinander angeordnet sind. Vorzugsweise weisen die Armteile und Abstände der Düsen die in der DE 100 41 148 A1 (Anspruch 1) angegebenen Größen- und Abstands-Verhältnisse zueinander auf.

Zur Erhöhung der zu beobachtenden "Verschlingung" der Träger (nanoskalige Fasern) insbesondere mit Pflanzen weist die Vorrichtung in einem besonders bevorzugen Ausführungsbeispiel weitere Mittel zur Bewegung der Düsen relativ zu den Pflanzen auf. Diese Mittel können aktive Mittel, wie Elektromotoren oder dergleichen, oder passive Mittel, wie z.B. an den Düsen angebrachte Strömungsflügelelemente sein, welche den bei der Bewegung der gesamten Vorrichtung auftretenden Fahrtwind zur Bewegung der Düsen nutzen. Ebenso ist das Anlegen eines elektrischen Wechselfeldes geeignet eine erhöhte Verschlingung der nanoskatigen Fasern mit den Pflanzen zu erreichen.

In einem weiteren Ausführungsbeispiel kann die Vorrichtung Mittel zur Messung und Steuerung oder/und Regelung der ausgetragenen Trägermenge (Masse, Volumen oder Fläche der nanoskaligen Fasern oder Röhren aufweisen, z. B. in Form einer Waage oder in Form optischen Erkennungsmitteln z. B. in Verbindung mit einen Durchflussmesser (welcher auch in Form eines induktiven Durchflussmessers zur Reduktion des Strömungswiderstand ausgelegt sein kann) aufweist. Alternativ kann auch ein Strömungsgeschwindigkeitsmesser in Verbindung mit dem bekannten Düsendurchmesser Aufschluss über die pro Zeiteinheit abgegebene Trägermenge in Form der nanoskaligen Fasern oder Röhren geben. Diese Mittel könnten insbesondere zur Kalibrierung der Vorrichtung eingesetzt werden, die entsprechend dem jahreszeitlichen Wechsel der Umwelteinflüsse vor jeder Ausbringung durchgeführt werden sollte, um so vor Beginn der Ausbringung jeweils die richtigen Parameter für die gewünsche Ausbringung pro Zeit oder Fläche einzustellen, Die Geschwindigkeit der relativen Bewegung von Vorrichtung zu Pflanzen oder Acker oder Pflanzensamen sollte dabei natürlich auch berücksichtigt werden. Die Kalibrierung vor Beginn der Ausbringung setzt somit voraus, dass für eine definierte Zeit die relative Bewegung mit der gewünschten Geschwindigkeit durchgeführt wird und entsprechend der Soll-Vorgabe für die auszutragende Masse die Parameter Druck auf das Gemisch, die Lösung oder die Schmelze, Temperatur/en an/in der Düse oder des Gemisches, der Lösung oder der Schmelze so variiert werden, bis der gewünscht Ist-Wert mit der Soll-Vorgabe übereinstimmt.

Ein weiteres vorteilhaftes Ausführungsbeispiel für die Vorrichtung (und auch für das Verfahren) sieht vor, dass eine Vorrichtung zur Erzeugung des elektrischen Potentials eine Vorrichtung zur Erzeugung eine Hochspannungswechselfeldes zwischen der ersten Elektrode (Düse der Vorrichtung) und der Gegenelektrode (oder -elektroden, d.h. der oder den Zielflächen) erzeugt. Damit kann der Grad der "Verschlingung" mit der Zielflächen durch die Fasern erhöht werden.

Dieses Wechselfeldes kann auch mechanisch und vorzugsweise durch eine oder mehrere bewegliche, vorzugsweise rotierende Düsen in Form von Haken- oder stabförmigen Elektroden erzeugt werden.

In einer besonders bevorzugen Ausführungsform weist die Vorrichtung zwei oder mehrere coaxial zueinander angeordnete Düsen zum Austritt des/der Polymer/en auf. Vorzugsweise liegen die Austrittsöffnungen aller dieser Düsen in einer Ebene und weisen das gleiche elektrische Potential auf, so dass mittels dieser Düsen ein Co-Etektrospinning durchführbar ist, so dass eine Kern- und eine Hüllfaser herstellbar sind.

In einer weiteren Ausführungsform weist die Vorrichtungen andere Mittel zur Beschichtung der aus der ersten Düse (d.h. der ersten Elektrode) austretenden nanoskaligen Fadens auf. Diese Mittel sind vorzugsweise die bekannten Mittel zur Durchführung von Dünnschicht-Depositionsvertahren, z.B. die Mittel der Sputtertechnik, der chemischen Abscheidung aus Gasphasen (CVD, MOCVD), der Aufdampftechniken und der Pyrolyse.

Dem Fachmann ist sofort einsichtig, dass insbesondere die aus der DE 100 234 56 A1 (TransMIT, "Meso- und Nanoröhren") und DE 100 40 897 A1 (TransMIT, "Herstellung von Polymerfasern mit nanoskaligen Morphologien") bekannten Träger auch als solche einen Nutzen für die Landwirtschaft aufweisen.

Dieser besteht in dem natürlichen Wirkstoff "Luft", welcher eingebracht in den Boden zur Auflockerung desselben sorgt. Auch die Einbindung von Wasser in diese Träger hat einen landwirtschaftlichen "Nutzen" zur Folge.

### Literaturverzeichnis

### Bibliographie:A

Brooks, T.W.. Doane, C.C., Osborn, O.G., Haworth, J.K. (1980). Experience in using a hollow fibre controlled release formulation in pheromone mediated suppression of Pectinophora gossypiella under humid tropical conditions. In: R. Baker, ed., Controlled Release of Bioactive Materials, pp. 227-236. New York: Academic Press.
Brooks, T.W., Doane. C.C., Stalen, R.T. (1979). Experience with the first commercial pheromone communication disruptive for suppression of an agricultural insect pest. pp 375-388. In: Chemical Ecology: Odour Communication in Animals, ed. F.J. Ritter. Amsterdam: Elservier/North Holland Biomedical. ISBN 0-444-80103-0.
Cardarelli, N.F. 1979. The efficacy, environmental impact and mechanism of release and dispersant of pesticide materials emitted from a controled-release dispenser, pp. 744-753 in H. Geissbühler, ed. Advances in pesticide research. Part 3. IUPAC. Oxford: Pergamon Press.
Deitzel, J.M., Kteinmeyer, J.K, Hirvonen, J.K and Beck Tan. N.C. (2001) Controlled deposition of electrospun poly(ethylene oxide) tibers. Polymer 42 (2001) 8163-8170, Elsevier
Hummel, H.E., Miller,T.A.,eds (11984). Techniques in Pheromone Research. Springen. New York. iSβN 0-387-90919-2
Hummel, H. E., Metcalf, R. L. (1996). Diabrotica barberi and D. virgifer virgifera fail to Orient Towards Sticky Traps in Maize Fields Permeated with the Plant Kairomones p-methoxy-phenylethanol and p-methoxy-trans-cinnamaldehyde. Med. Fac. Landbouww. Univ. Gent 61/3b, 1011-1018.
Hummel. H. E., Hein, D. F., Metcalf, R. L. (1997). Orientation disruption of Western Corn Rootworm Beetles by Air Permeation with Host Plant Kairomone Mimics. p. 36 in: 2nd FAO WCR/TCP Meeting and 4th International IWGO Workshop, Oct. 28-30, 1997, Gödöllö, Hungary, J. Kiss, ed.
Hummel, H. E., Metcalf, R. L., Lampman, R. L., Novak, R. (1998). Chemical ecology of Diebrotica virgifera virgifera beetle communication: orientation disruption of both sexes by permeation of Illinois maize fields with p-Methoxy-cinnamaldehyde. IWGO Newsletter XVIII (2): 29.
Hummel, H. E., Hein, D. F., Metcalf, R. L. (1998). Orientation disruption of Western Corn Rootworm Beetles by Air Permeation with Host Plant Kairomone Mimics. IWGO Newsletter 18 (1): 34-35.
Kydonieus, A.F., ed. 1982. Controlled release technologies. Methods, theory, and applications. Vols. 1 and 2. Boca Raton, Florida: CRC Press.
Kydonieus, A.F. and M. Beroza, eds. 1982. Insect suppression with controlled release pheromone systems. Vols. 1 and 2. Boca Raton, Florida: CRC Press.
Leonhardt, B.A., Beroza, M. (eds.) (1982). Insect pheromone technology: chemistry and applications. ACS Symposium Series # 190. American Chemical Society, Washington D.C. ISBN 0-8412-0724-0.
Plimmer, J.R., Inscoe, M.N. (1979). Insect pheromones: Some chemical problems involved in their use and development. pp. 249-260. ln: Chemical Ecology: Odour Communication in Animals, ed. F.J. Ritter. Amsterdam: Elservier/North Holland Biomedical. ISBN 0-444-80103-0.
Quisumbing, A.R., Kydonieus, A.F., Calsetta, D.R., Haus, J.B. (1976). Proc. Contr. Rel. Pest. Symp. 3. 40.
Shorey, H. H., Gerber, R. G. 1996. Use of puffers for disruption of sex pheromone communication of codling moths (Lepidoptera: Tortricidae) in walnut orchards. Environ. Entomol 25 (6): 1398-1400.
Weatherston. J., Golub, M.A., Brooks, T.W., Huang, Y.Y., Benn, M.H. (1981). Methodology for determining in release rates of pheromones from hollow fibres. pp. 425-443. Mitchell, E.R. (ed.): Management of insect pests with semiochemicals: Concept and practice. Plenum Press, New York, London;
Wennemann, L., H. E. Hummel. 2001. Diabrotica beetle orientation disruption with the plant kairomone mimic 4-methoxycinnamalddehyde in Zea mays L. Mitt. Dtsch. Ges. allg. angew. Ent. 13: 209-214.
Wennemann, L., H. E. Hummel, I. Ujváry, P. Sipos, A. Bándiné-Barlai, K. Szücs-Tóth. 2001. Analysis of novel formulation of the plant kairomone mimic 4-methaxycinnamaldehyde (MCA) using UV spectrometry. pp. 69-76. Proceedings: VIII Diabrotica subgroup meeting. XXI IWGO Conference, Padova, Italy. October 27 - November 3rd, 2001.
Wennemann, L., H. E. Hummel. 2001. Use of MCA (4-methoxycinnamaldehyde) as an orientation disruption tool for adult Western Corn Rootworm Diabrotica virgifera virgifera LeConte. pp. 77-82. Proceedings: VIII Diabrotica subgroup meeting. XXI IWGO Conference, Padova, Italy, October 27 - November 3rd, 2001.

### Bibliographie B Polymere

1) Baumgarten, P.K. J.Coll. Interf. Sci. 1971, 36, 71.
2) Larrando, J.; Manley, R.S.J. J. Pol. Sci. Phys. Ed. 1981, 19, 909.
3) Doshi, J.N.; Shrinivasan, G.; Reneker, D.H. Polym. News 1995, 20, 206.
4) Jaeger, R.: Schönherr, H.; Vansco, G. J.Macrormol. 1996, 29, 7634.
5) Reneker, D.H.; Yarin, A.L. ; Fong, H. ; Koombhongse, S. J.Appl. Phys. 2000, 87, 9.
6) J.M.Deitzel, J.D.Kleinmeyer, J.H. Hirvonen, N.C.B.tan, Polymer 42, 8163 (2001)
7) Z. Chen, M.D.Forster, W. Zhou, H. Fong, D.H.Reneker, Macromol. 34, 6156 (2001)
8) Bognitzki, M.; Hou, H.; Ishaque, M.: Frese, T.; Hellwig. M.: Schwarte. C.; Schaper, A.; Wendorff, J.H.; Greiner, A. Adv. Mat. 2000, 12, 637.
9) Bognitzki, M.: Czado, W.: Frese, T.; Schaper, A.; Hellwig, M.; Steinhart, M.; Greiner A.; Wendorff, J.H. Polym. Eng. Sci. 2001, 41, 982.
10) Bognitzki, M.; Czado, W.; Frese, T.; Schaper, A.; Hellwig, M.; Steinhart, M.: Greiner A.: Wendorff, J.H. Adv. Mat. 2001, 13, 70.
11) J. Crank, G.S.Park, "Diffusion in Polymers". Academic Press, N.Y., 1968
12) J. Comyn Ed., Polymer Permeability, Elsevier Appl. Sci. London . 1986
13) H.B.Hopfenberg, V, Stannett in "The Physics of Glassy Polymers", R.N.Haeward Ed. Applied Science Publ. London, 1973, p. 504
14) T.V. Naylor in "Comprehensive Polymer Science, S.G.Allen Ed., Pergamon Press, N.Y., 1989
15) F. Bueche, Physical Properties of Polymers, Interscience Publ. N.Y. (1962)
16) H.G.Elias,Makromoleküle, Hüthig und Wepf. basel (1975)

## Patentansprüche

1. Verfahren zur Ausbringung von nanoskaligen Polymerfasern und -röhren oder Hohlfasern als Träger für landwirtschaftliche oder landwirtschaftlich nutzbare Wirkstoffe im mit solchen Wirkstoffen beladenem oder unbeladenem Zustand, **dadurch gekennzeichnet, dass** die Ausbringung unter Verwendung des Verfahrens des Elektrospinnings erfolgt wobei der Ackerboden oder/und darauf befindliche Pflanzen oder/und darauf oder darin befindliche Samen, oder Samen ohne umgebende Ackerboden als Gegenelektrode genutzt werden.

2. Verfahren nach Anspruch **1 dadurch gekennzeichnet, dass** die Ausbringung unter relativer Bewegung der Gegenelektrode zur verfahrensgemäßen Elektrospinning-Vorrichtung erfolgt.

3. Verfahren nach Anspruch 1 bis 2 **dadurch gekennzeichnet, dass** neben dern Ackerboden oder/und den Pflanzen, oder/und einem Samen eine mit der Elektrospinning-Vorrichtung mechanisch oder/und elektrisch verbundene Gegenelektrode verwendet wird.

4. Verfahren nach Anspruch 1 bis 3 **dadurch gokennzeichnet,** dass der Wirkstoff mit dem zu verspinnenden Polymer vermengt oder vermischt wird.

5. Verfahren nach Anspruch 1 bis 4 **dadurch gekennzeichnet, dass** zur Umhüllung oder Beschichtung einer ersten Kern-Faser parallel zum Elektro-Spinning-Verfahren zur Herstellung dieser Kern-Faser ein zweites oder weitere ElektroSpinning-Verfahren zur Herstellung der ersten oder weiterer Umhüllung/en oder Beschichtung/en durchgeführt wird.

6. Verfahren nach Anspruch 5 **dadurch gekennzeichnet, dass** zur Durchführung des Verfahrens die zweite oder weitere Düsen zur Abgabe einer ersten oder weiteren Umhüllungen/Beschichtungen auf das gleiche elektrische Potential, wie die erste Düse, welche zur Abgabe der ersten Faser dient, gelegt werden.

7. Verfahren nach Anspruch 5 **dadurch gekennzeichnet, dass** zur Durchführung des Verfahrens die zweite oder weitere Düsen zur Abgabe einer ersten oder weiteren Umhüllungen/Beschichtungen auf ein anderes elektrisches Potential, wie die erste Düse, welche zur Abgabe der ersten Faser dient, gelegt werden, so dass die erste, d.h. die Kern-Faser als erste Gegenelektrode für die zweite oder weitere, der Umhüllung oder Beschichtung dienende Düse genutzt wird.

8. Verfahren nach Anspruch 1 bis 4 **dadurch gekennzeichnet, dass** zur Erhöhung der Verschlingung der Zielflãche/n durch die Fasern eine relative Bewegung der Düse/n zur relativen Bewegungsrichtung zwischen Düse und Zielfläche, etwa eine Rotation der Düse/n durchgeführt wird.

9. Verfahren nach Anspruch 1 bis 4 und 8 **dadurch gekennzeichnet, dass** zur weiteren Erhöhung der Verschlingung der Zielfla̅che/n durch die Fasern ein Wechselspannungsfeld zwischen erster Elektrode in Form der Düse/n und Gegenelektrode in Form von Ackerboden, Pflanze/n oder Same/n erzeugt wird.

10. Verfahren nach einem der Ansprüche 1 bis 9, **dadurch gekennzeichnet, dass** die nanoskaligen Fasern nanoskalige Polymerfasern, -röhren oder nanoskaligen Hohlfasern mit und/oder ohne nanoskatigen Morphologien sind, die als Träger für landwirtschaftliche oder landwirtschaftlich nutzbare Wirkstoffe dienen.

11. Verfahren nach Anspruch 10, **dadurch gekennzeichnet, dass** die Fasern oder Röhren einen Durchmesser von 10 nm bis 6 µm aufweisen und bioabbaubar sind, d.h. unter den natürlichen Umweltbedingungen abbaubar sind.

12. Verfahren nach Anspruch 10 oder 11, **dadurch gekennzeichnet, dass** die Fasern oder Röhren eine Oberfläche von 100 bis 700 m²/g aufweisen.

13. Verfahren nach einem der Ansprüche 10 bis 12, **dadurch gekennzeichnet, dass** die Freisetzung der Wirkstoffe aus oder von den Fasern oder aus oder von den Röhren durch Abbau der Fasern unter Diffusion oder/und Permeation erfolgt.

14. Vorrichtung zur Durchführung des Verfahrens nach Anspruch 1 bis 13 wobei die Vorrichtung eine Eletrospinning-Vorrichtung mit einer Spannungsquelle und einer mit dieser elektrisch verbundenen Düse aufweist, so dass sich die Düse zum Durchtritt der zu verspinnenden Polymer-Wirkstoffmischung (in Lösung oder Schmelze) auf einem anderen elektrischen Potential befindet, als die Zielfläche der Polymer-Wirkstoffmischung, welche die Gegenelektrode bildet, **dadurch gekennzeichnet, dass** die Vorrichtung Sensoren, etwa optische Sensoren zur Erfassung der Art oder/und des Zustandes der Zielflächen aufweist, weiche mit Vergleichsmitteln der Vorrichtung derart verbunden ausgeführt sind, dass nur nach positiver Erkennung der Art oder/und des Zustandes der Zierfläche das Verfahren zur "Ein- oder Bespinnung" der Zielfäche einsetzt.

15. Vorrichtung nach Anspruch 14 **dadurch gekennzeichnet, dass** die Vorrichtung relativ zu einem Ackerboden beweglich ausgebildet ist.

16. Vorrichtung nach Anspruch 14 bis 15 **dadurch gekennzeichnet, dass** die Vorrichtung neben den Zielflächen weitere Gegenelektroden, etwa in Form von neben den Zielflächen angeordneten, vorzugsweise metallische Gegenetektroden aufweist.

17. Vorrichtung nach Anspruch 14 bis 16 **dadurch gekennzeichnet, dass** die Vorrichtung neben der ersten Düse zur Ausgabe einer Trägerfaser weitere Düsen zur Ausbringung von Umhüllungen oder Beschichtungen aus Polymeren aufweist, wobei die weiteren Düsen das gleiche oder ein anderes elektrisches Potential wie die erste Düse aufweist, so dass ein Co-Elektrospinning ermöglicht wird.

18. Vorrichtung nach Anspruch 14 bis 17 **dadurch gekennzeichnet, dass** die Vorrichtung Mittel zur Verfassung der ausgebrachten Träger- oder/und Wirkstoffmasse oder -geschwindigkeit aufweist, welche vorzugsweise mit ebenso vorgesehenen Mitteln zur Regelung der Ausbringungsmasse oder -geschwindigkeit verbunden ausgeführt sind.

19. Vorrichtung nach Anspruch 14 bis 18 **dadurch gekennzeichnet, dass** die Vorrichtung Mittel zur Vermischung oder Vermengung der Polymere mit den Wirkstoffen aufweist, sowie bevorzugt weitere Mittel zur Temperierung oder Wasserversorgung der Polymere und/oder Wirkstoffe aufweist.

20. Vorrichtung nach Anspruch 14 bis 19 **dadurch gekennzeichnet, dass** die Vorrichtung Mittel zur Beschichtung in Form von Mitteln zur einer Polymerfaser nach Austritt aus Vermischung oder Vermengung der Polymere mit den Wirkstoffen aufweist, sowie bevorzugt weitere Mittel zur Temperierung oder Wasserversorgung der Polymere und/oder Wirkstoffe aufweist.

21. Verfahren zur Beschichtung von pflanzlichen Zielflächen mit nanoskaligen Fasern, wobei die Zielflächen einem elektrischen Potential und damit einem elektrischen Feld ausgesetzt werden und ausgehend von einer Düse, welche sich auf einem höheren elektrischen Potential als die Zierfläche befindet, eine einen Polymeren enthaltende Lösung oder Schmelze auf die Zielfläche abgegeben wird, **dadurch gekennzeichnet, dass** die nanoskaligen Fasern nanoskalige Polymerfasern, -röhren oder nanoskaligen Hohlfasern mit und/oder ohne nanoskaligen Morphologien sind, die als Träger für landwirtschaftliche oder landwirtschaftlich nutzbare Wirkstoffe dienen, das die Fasern oder Röhren einen Durchmesser von 10 nm bis 6 µm aufweisen und bioabbaubar sind, d.h. unter den natürlichen Umweltbedingungen abbaubar sind, dass die Fasern oder Röhren eine Oberfläche von 100 bis 700 m²/g aufweisen und dass die Freisetzung der Wirkstoffe aus oder von den Fasern oder aus oder von den Röhren durch Abbau der Fasern unter Diffusion oder/und Permeation erfolgt.

## Claims

1. Method for the application of nanoscaled polymer fibres and tubes or hollow fibres as carriers for agriculturally applicable active agents in a loaded or unloaded state with such active agents, wherein the application occurs using the method of electrospinning, wherein the arable land and/or plants existing thereon and/or seeds existing thereon or within, or seeds without surrounding arable land are used as a counter electrode.

2. Method according to claim 1, wherein the application occurs under relative movement of the counter electrode with regard to the electrospinning device according to the present method.

3. Method according to claim 1 to 2, wherein aside from the arable land and/or plants and/or a seed, a counter electrode is used which is mechanically and/or electrically connected to the electrospinning device.

4. Method according to claim 1 to 3, wherein the active agent is blended or mixed with the polymer to be electrospun.

5. Method according to claim 1 to 4, wherein, for the purpose of enveloping or coating a first core fiber, a second or other electrospinning method(s) is/are implemented for the production of the first or other envelopment(s) or coating(s) in parallel to the electrospinning method implemented for the production of this core fiber.

6. Method according to claim 5, wherein in order to carry out the method, the second or other nozzles for the application of a first or other envelope(s)/coating(s) is/are set to the same electrical potential as the first nozzle which serves for the application of the first fibre.

7. Method according to claim 5, wherein in order to carry out the method, the second or other nozzle(s) for the application of a first or other envelope(s)/coating(s) is/are set to another electrical potential than the first nozzle which serves for the application of the first fibre in such a way that the first, i.e. the core fibre, is used as the first counter electrode for the second or other nozzle(s) serving as an envelope or coating.

8. Method according to claim 1 to 4, wherein a relative movement of the nozzle/s with regard to the relative direction of movement between the nozzle and the target area, e.g. a rotation of the nozzle/s, is carried out in order to increase the entanglement of the target area(s).

9. Method according to claim 1 to 4 and 8 , wherein an alternating voltage field between the first electrode in the form of the nozzle(s) and the counter electrode in the form of the arable land, plant(s) or seed(s) is generated in order to further increase the entanglement of the target area(s) by the fibres.

10. Method according to one of the claims 1 to 9, wherein the nanoscaled fibres are nanoscaled polymer fibres, tubes or nanoscaled hollow fibres with and/or without nanoscaled morphologies which serve as a carrier for agricultural or agriculturally applicable active agents.

11. Method according to claim 10, wherein the fibres or tubes comprise a diameter from 10nm to 6µm and are biodegradable, i.e. degradable under natural environmental conditions.

12. Method according to claim 10 or 11, wherein the fibres or tubes comprise a surface area from 100 to 700 m2/g.

13. Method according to one of the claims 10 to 12, wherein the release of the active agents out of or from the fibres or out of or from the tubes occurs via the degradation of the fibres under diffusion and/or permeation.

14. Device for the implementation of the method according to claim 1 to 13, wherein the device comprises a electrospinning device with a voltage source and a nozzle electrically connected to the latter, so that the nozzle for the passage of the polymer active agent mixture to be electrospun (in solution or melt) is located on another electrical potential than the target area of the polymer active agent mixture, which forms the counter electrode, wherein the device comprises sensors, such as optical sensors for the detection of the type and/or the state of the target areas, which are arranged and connected in such a way to means of comparison of the device that only after a positive detection of the type and/or the state of the target area does the process of the "entanglement or spinning" of the target area start.

15. Device according to claim 14, wherein the device is arranged in a way which is moveable relative to the arable soil.

16. Device according to claim 14 to 15, wherein apart from the target areas, the device comprises further counter electrodes, e.g. in the form of preferably metallic counter electrodes which are arranged next to the target areas.

17. Device according to claim 14 to 16, wherein the device comprises further nozzles apart from the first nozzle for the application/extraction of envelopes or coatings made from polymers for the application of a carrier fibre, wherein the other nozzles comprise the same or another electric potential as that of the first nozzle, thus enabling co-electro spinning.

18. Device according to claim 14 to 17, wherein the device comprises means for the detection of the carrier or active agent mass or speed applied which are preferably arranged in a way that they are connected to devices provided for the regulation of the application mass or application speed as well.

19. Device according to claim 14 to 18, wherein the device comprises means for the blending or mixing of the polymers with the active agents, as well as preferably further means to control the temperature or the water supply of the polymers and/or the active agents.

20. Device according to claim 14 to 19, wherein the device comprises means for the coating of a polymer fibre after extraction and for blending or mixing the polymers with the active agents, as well as preferably further means to control the temperature or the water supply of the polymers and/or the active agents.

21. Method for the coating of vegetable target areas with nanoscaled fibres, wherein the target areas are exposed to an electrical potential and thus an electrical field and, starting from a nozzle which is located on a higher electric potential than the target area, a solution or melt containing a polymer or a melt is applied to the target area, wherein the nanoscaled fibres are nanoscaled polymer fibres, polymer tubes or nanoscaled hollow fibres with and/or without nanoscaled morphologies, which serve as carriers for the agricultural or agriculturally applicable active agents, wherein the fibres or tubes comprise a diameter of 10 nm to 6 µm and are biodegradable, i.e. are degradable under natural environmental conditions; the fibres or tubes comprise a surface area from 100 to 700 m²/g, and the release of the active agents out of or from the fibres or out of or from the tubes occurs via the degradation of the fibres under diffusion or/and permeation.

## Revendications

1. Procédé pour la production de fibres et de tubes polymères nanométriques ou de fibres creuses servant de support pour des agents actifs à usage agricole à l'état chargé ou non chargé avec ces agents actifs, **caractérisé en ce que** l'application s'effectue en utilisant le procédé de filage électrostatique, où le sol ou/et les plantes qui se trouvent dessus ou/et les graines qui se trouvent dessus ou à l'intérieur, ou des graines sans terres agricoles environnantes sont utilisés comme une contre-électrode.

2. Procédé selon la revendication 1, **caractérisé en ce que** la production s'effectue sous un mouvement relatif de la contre-électrode par rapport au dispositif de filage électrostatique conformément au procédé.

3. Procédé selon la revendication 1 à 2, **caractérisé en ce qu'**une contre-électrode connectée mécaniquement ou/et électriquement avec le dispositif de filage électrostatique est utilisée en plus du sol ou/et des plantes ou/et d'une graine.

4. Procédé selon la revendication 1 à 3, **caractérisé en ce que** l'agent actif est combiné ou mélangé avec le polymère à filer.

5. Procédé selon la revendication 1 à 4, **caractérisé en ce que,** pour le gainage ou le revêtement d'un premier noyau de fibres en parallèle au procédé de filage électrostatique pour la production de ce noyau de fibres, un second ou autres procédés de filage électrostatique est ou sont effectué(s) pour la production du premier ou d'autres gainage(s) ou revêtement(s).

6. Procédé selon la revendication 5, **caractérisé en ce que,** pour la réalisation du procédé, la seconde ou les autres buse(s) sont placées pour l'application d'un premier ou autres gainages/revêtements sur le même potentiel électrique que la première buse, qui sert à l'application de la première fibre.

7. Procédé selon la revendication 5, **caractérisé en ce que,** pour la réalisation du procédé, la seconde ou les autres buse(s) est ou sont placée(s) pour l'application d'un premier ou autres gainages/revêtements sur un potentiel électrique différent que la première buse, qui sert à la l'application de la première fibre, de sorte que le premier, à savoir le noyau de fibre, est utilisé comme première contre-électrode pour la seconde ou les autres buse(s) servant au gainage ou au revêtement.

8. Procédé selon la revendication 1 à 4, **caractérisé en ce qu'un** mouvement relatif de la buse ou des buses par rapport au mouvement relatif entre la filière et la surface cible, telle qu'une rotation de la buse ou des buses est effectuée pour l'augmentation de l'enchevêtrement de la zone cible(s) à travers les fibres.

9. Procédé selon la revendication 1 à 4 et 8, **caractérisé en ce qu**'un champ de courant alternatif entre la première électrode sous la forme de buse(s) et une contre-électrode sous la forme de sol, de plante(s) ou de graine(s) est produit pour augmenter encore l'enchevêtrement de la zone cible(s) à travers les fibres.

10. Procédé selon l'une des revendications 1 à 9, **caractérisé en ce que** les fibres nanométriques sont des fibres polymères nanométriques, tubes polymères nanométriques ou fibres creuses nanométriques avec et/ou sans morphologies nanométriques qui servent de support pour les agents actifs à usage agricole.

11. Procédé selon la revendication 10, **caractérisé en ce que** les fibres ou les tubes présentent un diamètre de 10 nm à 6 µm et sont biodégradables, à savoir décomposables dans des conditions naturelles.

12. Procédé selon la revendication 10 ou 11, **caractérisé en ce que** les fibres ou les tubes présentent une surface de 100 à 700 m²/g.

13. Procédé selon l'une des revendications 10 à 12, **caractérisé en ce que** la libération des agents actifs s'effectue à partir de ou par les fibres ou à partir de ou par les tubes à travers la décomposition des fibres sous la diffusion et/ou perméation.

14. Dispositif pour la réalisation du procédé selon la revendication 1 à 13, où le dispositif présente un dispositif de filage électrostatique avec une source de tension et une buse électriquement connectée à celle-ci, de sorte que la buse se trouve pour le passage du mélange polymère-agent actif à filer (en solution ou en fusion) à un potentiel électrique différent à la surface cible du mélange polymère-agent qui forme la contre-électrode, **caractérisé en ce que** le dispositif comprend des capteurs, par exemple, des capteurs optiques pour la détection de la nature ou/et de l'état des surfaces cibles, qui sont connectés avec des moyens de comparaison du dispositif de telle sorte que le procédé de "guipage" de la surface cible ne commence qu'après une reconnaissance positive de la nature ou/et de l'état de la surface cible.

15. Dispositif selon la revendication 14, **caractérisé en ce que** le dispositif est conçu pour être mobile par rapport à un sol.

16. Dispositif selon la revendication 14 à 15, **caractérisé en ce que** le dispositif présente, en plus des surfaces cibles, d'autres contre-électrodes sous forme de contre-électrodes disposées près des surfaces cibles, de préférence métalliques.

17. Dispositif selon la revendication 14 à 16, **caractérisé en ce que** le dispositif comprend, en plus de la première buse pour l'application d'une fibre de substrat, d'autres buses pour l'application de gainages ou de revêtements de polymères, où d'autres buses présentent le même ou un autre potentiel électrique que la première buse, de sorte qu'un cofilage électrostatique soit possible.

18. Dispositif selon la revendication 14 à 17, **caractérisé en ce que** le dispositif présente des moyens pour détecter la masse ou la vitesse du support ou/et d'agent actif appliquée qui sont réalisés de préférence d'une sorte connectée avec des moyens prévus pour la régulation de la vitesse ou de la masse de production.

19. Dispositif selon la revendication 14 à 18, **caractérisé en ce que** le dispositif présente des moyens pour combiner ou mélanger les polymères avec les agents actifs et de préférence d'autres moyens pour la mise en température ou l'alimentation en eau des polymères et/ou des agents actifs.

20. Dispositif selon la revendication 14 à 19, **caractérisé en ce que** le dispositif présente des moyens pour le revêtement d'une fibre polymère après le passage et une combinaison ou un mélange des polymères avec les agents actifs et de préférence d'autres moyens pour la mise en température ou l'alimentation en eau des polymères et/ou des agents actifs.

21. Procédé pour le revêtement de surfaces végétales cibles avec des fibres nanométriques, où lesdites surfaces cibles sont exposées à un potentiel électrique, et donc à un champ électrique et à partir d'une buse, qui se situe sur un plus haut potentiel électrique que la surface cible, une fusion ou une solution contenant un polymère est appliquée sur la surface cible, **caractérisé en ce que** les fibres nanométriques, les fibres et tubes polymères nanométriques ou les fibres creuses nanométriques sont avec et/ou sans morphologies nanométriques qui servent de support pour les agents actifs à usage agricole, **en ce que** les fibres ou tubes présentent un diamètre de 10 nm à 6 µm et sont biodégradables, à savoir décomposables dans des conditions naturelles, **en ce que** les fibres ou les tubes présentent une surface de 100 à 700 m²/g, et **en ce que** la libération de agents actifs s'effectue à partir de ou par les fibres ou à partir de ou par les tubes à travers la décomposition des fibres sous la diffusion et/ou perméation.
